# EUROPEAN PATENT APPLICATION

(11) **EP 3 991 828 A1**
(43) Date of publication of application: **04.05.2022**
(21) Application number: 21764957.3
(22) Date of filing: 22.01.2021
(51) Int. Cl.: B01D 53/50, B01D 53/18, B01D 53/78, B01D 53/92

(54) **EXHAUST GAS TREATMENT DEVICE AND LIQUID DISCHARGE UNIT**

(30) Priority: 06.03.2020 JP 2020039379
(71) Applicant: Fuji Electric Co., Ltd., Kawasaki-shi, Kanagawa 210-9530 (JP)
(72) Inventor: WATANABE Kenji, Kawasaki-shi, Kanagawa 210-9530 (JP); HAYASHI Kazuki, Kawasaki-shi, Kanagawa 210-9530 (JP)
(74) Representative: MERH-IP Matias Erny Reichl Hoffmann Patentanwälte PartG mbB
(86) International application number: PCT/JP2021/002334
(87) International publication number: WO 2021/176880

(57) **Abstract**

Provided is an exhaust gas treatment apparatus including: a reaction tower having an exhaust gas introduction port to which an exhaust gas is introduced, an exhaust gas discharge port from which the exhaust gas is discharged, and a liquid spraying portion provided between the exhaust gas introduction port and the exhaust gas discharge port, the reaction tower being supplied with a liquid for treating the exhaust gas; a discharging portion arranged upward from the liquid spraying portion, and from which the liquid is discharged; and a discharge pipe connected to the discharging portion and from which the liquid discharged by the discharging portion is discharged. In the liquid spraying portion, the liquid is sprayed into the reaction tower. The discharging portion includes: an internal tube portion through which the exhaust gas passes; an external tube portion configured to surround the internal tube portion; and a bottom for connecting the internal tube portion and the external tube portion, and discharges the liquid in a discharging space between the internal tube portion and the external tube portion, and upward from the bottom. The discharge pipe includes a liquid passage portion for penetrating the external tube portion and thereby is connected to the discharging space, the liquid passage portion being passed through by the liquid. At least a part of the liquid passage portion that penetrates the external tube portion is arranged downward from an upper surface of a main portion of the bottom.

## Description

### BACKGROUND

### 1. TECHNICAL FIELD

The present invention relates to an exhaust gas treatment apparatus and a liquid discharge unit.

### 2. RELATED ART

Conventionally, an exhaust gas treatment apparatus including a scraping member for collecting liquid contained in an exhaust gas has been known (refer to Patent Document 1, for example).

Patent Document 1: Japanese patent application publication No. H1 1-151426.

In an exhaust gas treatment apparatus, it is desirable to reduce liquid, which is contained in an exhaust gas, to be discharged outside the exhaust gas treatment apparatus.

In a first aspect of the present invention, there is provided an exhaust gas treatment apparatus. The exhaust gas treatment apparatus includes: a reaction tower having an exhaust gas introduction port to which an exhaust gas is introduced, an exhaust gas discharge port from which the exhaust gas is discharged, and a liquid spraying portion provided between the exhaust gas introduction port and the exhaust gas discharge port, the reaction tower being supplied with a liquid for treating the exhaust gas; a discharging portion arranged upward from the liquid spraying portion, and from which the liquid is discharged; and a discharge pipe connected to the discharging portion and from which the liquid discharged by the discharging portion is discharged. In the liquid spraying portion, the liquid is sprayed into the reaction tower. The discharging portion includes: an internal tube portion through which the exhaust gas passes; an external tube portion provided so as to surround the internal tube portion; and a bottom for connecting the internal tube portion and the external tube portion, the discharging portion discharges the liquid in a discharging space between the internal tube portion and the external tube portion, and upward from the bottom. The discharge pipe includes a liquid passage portion for penetrating the external tube portion and thereby is connected to the discharging space, the liquid passage portion being passed through by the liquid. At least a part of the liquid passage portion that penetrates the external tube portion is arranged downward from an upper surface of a main portion of the bottom.

The discharge pipe may penetrate the external tube portion and be in a direct contact with the internal tube portion.

The external tube portion may have an opening to which the discharge pipe is inserted. The bottom may be provided with a first notch corresponding to the opening. The discharge pipe may be connected to the first notch.

The discharge pipe may include an inserting part to be inserted to the discharging space. The discharge pipe may be provided with a second notch on a pipe wall above the inserting part.

The second notch of the discharge pipe may be connected to the first notch of the bottom.

An area of the second notch may be equal to or greater than a cross-sectional area of the liquid passage portion of the discharge pipe.

As seen in a direction from the exhaust gas discharge port to the exhaust gas introduction port, a curvature of an edge of the inserting part may be equal to a curvature of the internal tube portion.

As seen in a direction intersecting a cross-section of the discharge pipe, an upper end of a pipe wall below the second notch of the discharge pipe may either be arranged at the same height as an upper surface of the bottom, or downward from the upper surface of the bottom.

The bottom may include an end being in a direct contact with the first notch. A thickness of an end of the bottom in a direction from the upper surface to a lower surface thereof may be greater than a thickness between an upper surface and a lower surface of the bottom excluding the end.

In the cross-section of the discharge pipe, a curvature of a part of the pipe wall of the discharge pipe, which is in a direct contact with the bottom may be greater than a curvature of a part of a side wall excluding another part of the side wall.

The reaction tower, the discharging portion, and the discharge pipe may be disposed on a ship. The discharge pipe may be disposed in a travel direction of the ship.

The internal tube portion may include a window portion that penetrates a side wall of the internal tube portion, and connects the inside of the internal tube portion and the discharging space. The discharge pipe may be disposed downward from the window.

The internal tube portion may further include an eave extending from the side wall of the internal tube portion upward from the window portion to an inside of the internal tube portion.

The discharging portion may be provided in the reaction tower. The discharging portion may be provided between the liquid spraying portion and the exhaust gas discharge port.

The exhaust gas treatment apparatus may further include an exhaust gas discharging portion connected to the exhaust gas discharge port. The exhaust gas discharging portion may include an exhaust gas passage portion through which the exhaust gas passes. The exhaust gas discharging portion may include one end connected to the exhaust gas discharge port, and another end on the opposite side of the one end. An area of the exhaust gas passage portion in a cross-section orthogonal to a direction from the one end to the another end may be smaller than an area inside the reaction tower in a cross-section orthogonal to a direction from the exhaust gas introduction port to the exhaust gas discharge port. The discharging portion may be provided in the exhaust gas discharging portion.

In a second aspect of the present invention, there is provided a liquid discharge unit. The liquid discharge unit is connected to an exhaust gas treatment apparatus for treating an exhaust gas. The liquid discharge unit includes: a discharging portion having an internal tube portion connected to the exhaust gas treatment apparatus, an external tube portion provided so as to surround the internal tube portion, and a bottom for connecting the internal tube portion and the external tube portion, the discharging portion discharges liquid contained inside the internal tube portion to a discharging space between the internal tube portion and the external tube portion, and upward from the bottom; and a discharge pipe which penetrates the external tube portion and includes a liquid passage portion through which the liquid passes. At least a part of the liquid passage portion that penetrates the external tube portion is arranged downward from an upper surface of a main portion of the bottom.

The summary clause does not necessarily describe all necessary features of the embodiments of the present invention. The present invention may also be a sub-combination of the features described above.

### BRIEF DESCRIPTION OF THE DRAWINGS

Fig. 1 illustrates one example of an exhaust gas treatment apparatus 100 according to one embodiment of the present invention.
Fig. 2 is an enlarged view illustrating one example of a liquid spraying portion 90 of Fig. 1.
Fig. 3 is a perspective view illustrating one example of an exhaust gas discharging portion 91 of Fig. 1.
Fig. 4 is an enlarged perspective view of a connecting part between a discharging portion 61 and a discharge pipe 51 of Fig. 3.
Fig. 5 illustrates one example of the connecting part between the discharging portion 61 and the discharge pipe 51, in which the discharging portion 61 and the discharge pipe 51 illustrated in Fig. 4 have been connected, as seen from a travel direction E2 of an exhaust gas 30 (Z axis direction).
Fig. 6 illustrates one example of the connecting part between the discharging portion 61 and the discharge pipe 51, in which the discharging portion 61 and the discharge pipe 51 illustrated in Fig. 4 and Fig. 5 have been connected, as seen in a Y axis direction.
Fig. 7 illustrates one example of the connecting part between the discharging portion 61 and the discharge pipe 51 of Fig. 5 and Fig. 6 as seen in an X axis direction.
Fig. 8 illustrates another example of the connecting part between the discharging portion 61 and the discharge pipe 51 of Fig. 5 and Fig. 6 as seen in the X axis direction.
Fig. 9 illustrates one example of the connecting part between the discharging portion 61 and the discharge pipe 51 of Fig. 5 and Fig. 6 as seen in the X axis direction.
Fig. 10 illustrates another example of the connecting part between the discharging portion 61 and the discharge pipe 51 of Fig. 5 and Fig. 6 as seen in the X axis direction.
Fig. 11 illustrates yet another example of the connecting part between the discharging portion 61 and the discharge pipe 51 of Fig. 5 and Fig. 6 as seen in the X axis direction.
Fig. 12 is an enlarged perspective view of the discharge pipe 51 illustrated in Fig. 4.
Fig. 13 is a perspective view illustrating another example of the discharge pipe 51.
Fig. 14 illustrates another example of the connecting part between the discharging portion 61 and the discharge pipe 51 of Fig. 5 and Fig. 6 as seen in the X axis direction.
Fig. 15 illustrates one example of the exhaust gas discharging portion 91 illustrated in Fig. 3, as seen from the travel direction E2 of the exhaust gas 30.
Fig. 16 illustrates another example of the exhaust gas discharging portion 91, as seen from the travel direction E2 of the exhaust gas 30.
Fig. 17 illustrates one example of a cross-section along a line G-G' of Fig. 16.
Fig. 18 is another perspective view illustrating one example of the exhaust gas discharging portion 91 of Fig. 1.
Fig. 19 illustrates one example of a cross-section along a line J-J' of Fig. 18.
Fig. 20 illustrates one example of placement of the exhaust gas treatment apparatus 100 on a ship 300.
Fig. 21 is an enlarged view of a region including the exhaust gas treatment apparatus 100 and a side 330 of the ship of Fig. 20.
Fig. 22 illustrates another example of the exhaust gas treatment apparatus 100 according to one embodiment of the present invention.

### DESCRIPTION OF EXEMPLARY EMBODIMENTS

Hereinafter, (some) embodiment(s) of the present invention will be described. The embodiment(s) do(es) not limit the invention according to the claims, and all the combinations of the features described in the embodiment(s) are not necessarily essential to means provided by aspects of the invention.

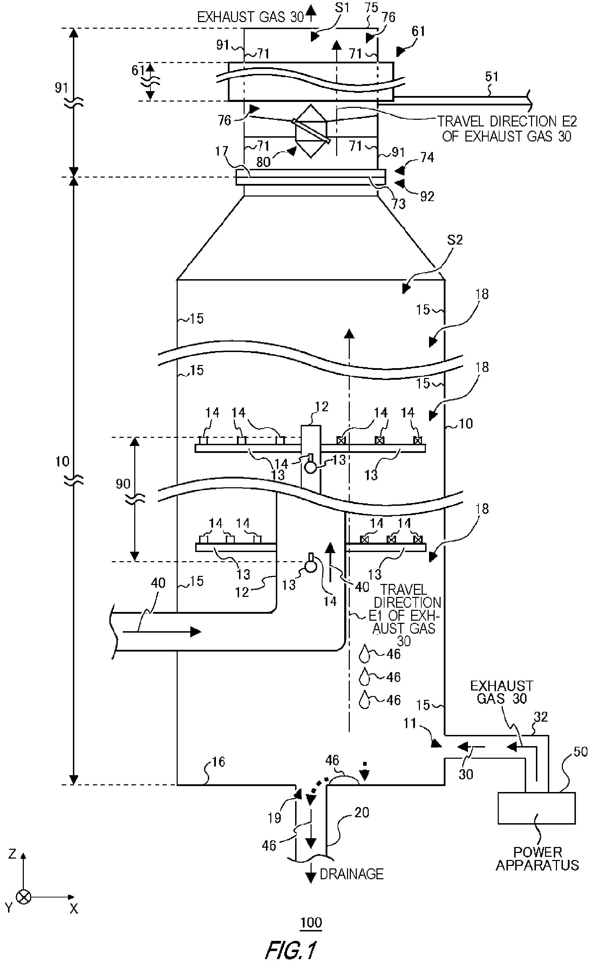

Fig. 1 illustrates one example of an exhaust gas treatment apparatus 100 according to one embodiment of the present invention. The exhaust gas treatment apparatus 100 includes a reaction tower 10, a discharging portion 61, and a discharge pipe 51. The exhaust gas treatment apparatus 100 may include an exhaust gas introducing pipe 32, a power apparatus 50, and a drainage pipe 20.

The power apparatus 50 is an engine, a boiler, or the like, for example. The power apparatus 50 discharges an exhaust gas 30. The exhaust gas introducing pipe 32 connects the power apparatus 50 and the reaction tower 10. The exhaust gas 30 is introduced to the reaction tower 10. In the present example, the exhaust gas 30 discharged from the power apparatus 50 passes through the exhaust gas introducing pipe 32, and then is introduced to the reaction tower 10.

The reaction tower 10 includes an exhaust gas introduction port 11 to which the exhaust gas 30 is introduced, and an exhaust gas discharge port 17 from which the exhaust gas 30 is discharged. The reaction tower 10 is supplied with a liquid 40 for treating the exhaust gas 30. The exhaust gas 30 is treated inside the reaction tower 10 with the liquid 40 supplied to the reaction tower 10. The liquid 40 is sea water or alkaline liquid, for example. The exhaust gas 30 being treated refers to removing harmful substances contained in the exhaust gas 30. The liquid 40 with which the exhaust gas 30 is treated, turns into an exhausted liquid 46 after the treatment.

The discharging portion 61 discharges the liquid 40 contained in the exhaust gas 30. The discharge pipe 51 is connected to the discharging portion 61. The discharge pipe 51 discharges the liquid 40 discharged by the discharging portion 61. The discharge pipe 51 may discharge the liquid 40 outside the reaction tower 10. In Fig. 1, a double-headed arrow illustrates a range of the discharging portion 61.

The reaction tower 10 of the present example includes a side wall 15, a bottom surface 16, a gas treating portion 18, and a liquid discharge port 19. The reaction tower 10 of the present example is in a cylindrical shape. In the present example, the exhaust gas discharge port 17 is arranged at a position facing the bottom surface 16 in a direction parallel to a central axis of the cylindrical reaction tower 10. In the present example, the side wall 15 and the bottom surface 16 are respectively an internal surface and a bottom surface of the cylindrical reaction tower 10. The exhaust gas introduction port 11 may be provided on the side wall 15. In the present example, the exhaust gas 30 passes through from the exhaust gas introducing pipe 32 to the exhaust gas introduction port 11, and then is introduced to the gas treating portion 18.

The side wall 15 and the bottom surface 16 are formed of material having durability against the exhaust gas 30, and the liquid 40 and the exhausted liquid 46. The material may be: a combination of iron material such as SS400 or S-TEN (registered trademark) and at least one of a coating agent and a painting agent; a copper alloy such as naval brass; an aluminum alloy such as aluminum brass; a nickel alloy such as cupronickel; or stainless steel such as Hastelloy (registered trademark), SUS316L, SUS329J4L or SUS312.

Herein, an orthogonal coordinate axes consisting of X axis, Y axis, and Z axis may be used for describing a technical matter. Herein, an XY plane is a plane parallel to the bottom surface 16 of the reaction tower 10, and a Z axis is a direction from the bottom surface 16 towards the exhaust gas discharge port 17 (direction perpendicular to the bottom surface 16). Herein, an X axis direction is a predetermined direction in the XY plane, and a Y axis direction is a direction orthogonal to the X axis in the XY plane.

A Z axis direction may be parallel to a vertical direction. When the Z axis direction is parallel to the vertical direction, the XY plane may be a horizontal plane.

The exhaust gas treatment apparatus 100 is a cyclone scrubber for a ship, for example. In the cyclone scrubber, the exhaust gas 30 introduced to the reaction tower 10 spins inside the reaction tower 10 while traveling in the direction from the exhaust gas introduction port 11 to the exhaust gas discharge port 17 (Z axis direction in the present example). In the present example, the exhaust gas 30 spins in the XY plane, as seen in a direction from the exhaust gas discharge port 17 to the bottom surface 16.

A travel direction E1 is a direction in which the exhaust gas 30 travels from the exhaust gas introduction port 11 to the exhaust gas discharge port 17 inside the reaction tower 10. The exhaust gas 30 travelling in the travel direction E1 refers to the exhaust gas 30 travelling in a direction from the exhaust gas introduction port 11 to the exhaust gas discharge port 17. In the present example, the travel direction E1 of the exhaust gas 30 is parallel to the Z axis. In Fig. 1, a chain line illustrates the travel direction E1 of the exhaust gas 30.

The exhaust gas treatment apparatus 100 may further include an exhaust gas discharging portion 91. The exhaust gas discharging portion 91 of the present example includes a side wall 71, one end 73, another end 75, and an exhaust gas passage portion 76. The exhaust gas passage portion 76 is a space through which the exhaust gas 30 passes inside the exhaust gas discharging portion 91. A travel direction E2 is a travel direction of the exhaust gas 30 that passes through the exhaust gas passage portion 76. The one end 73 is an end on one side of the exhaust gas discharging portion 91 in the travel direction E2 of the exhaust gas 30. The another end 75 is an end on the opposite side (end on the other side) of the one end 73, in the travel direction E2 of the exhaust gas 30. The side wall 71 is an internal surface of the exhaust gas passage portion 76 provided so as to surround the exhaust gas passage portion 76 in the XY plane.

The exhaust gas discharging portion 91 may include a fastening portion 74 on the one end 73. The reaction tower 10 may include a fastening portion 92 on the exhaust gas discharge port 17. The one end 73 of the exhaust gas discharging portion 91 and the exhaust gas discharge port 17 may be securely coupled together by the fastening portion 74 and the fastening portion 92. The fastening portion 74 and the fastening portion 92 are flanges, for example.

The travel direction E1 of the exhaust gas 30 inside the reaction tower 10 may be parallel to the vertical direction, or may be parallel to a horizontal direction. That is, the reaction tower 10 may be disposed such that the central axis of the reaction tower 10 is parallel to the vertical direction, or is parallel to the horizontal direction.

The travel direction E2 of the exhaust gas 30 inside the exhaust gas discharging portion 91 may not be parallel to the horizontal direction, but be parallel to the vertical direction. That is, the exhaust gas discharging portion 91 may be disposed such that a central axis of the exhaust gas discharging portion 91 is not parallel to the horizontal direction, but is parallel to the vertical direction.

The travel direction E1 and the travel direction E2 of the exhaust gas 30 may be, or may not be parallel to each other. In the present example, the travel direction E1 and the travel direction E2 of the exhaust gas 30 are parallel to each other.

The reaction tower 10 includes a liquid spraying portion 90. The liquid spraying portion 90 is provided between the exhaust gas introduction port 11 and the exhaust gas discharge port 17. The liquid spraying portion 90 may be a part of a region between the exhaust gas introduction port 11 and the exhaust gas discharge port 17, in the travel direction E1 of the exhaust gas 30. The liquid spraying portion 90 may be an entire region of the reaction tower 10 when the reaction tower 10 is seen in a direction from the exhaust gas discharge port 17 to the bottom surface 16 (the XY plane). In the liquid spraying portion 90, the liquid 40 is sprayed into the reaction tower 10.

The reaction tower 10 may include one or more trunk tubes 12 to which the liquid 40 is supplied, and one or more branch tubes 13. The reaction tower 10 may include one or more spraying portions 14 for spraying the liquid 40. In the present example, the spraying portion 14 is connected to the branch tube 13, and the branch tube 13 is connected to the trunk tube 12.

In the present example, at least a part of the trunk tube 12, the branch tube 13, and the spraying portion 14 are disposed in the liquid spraying portion 90. In Fig. 1, a double-headed arrow illustrates a range of the liquid spraying portion 90 inside the reaction tower 10. The liquid spraying portion 90 may range from the spraying portion 14 arranged on a side closest to the exhaust gas introduction port 11 to the spraying portion 14 arranged on a side closest to the exhaust gas discharge port 17 in a direction parallel to the Z axis. The liquid spraying portion 90 may be a region surrounded by the side wall 15 in the XY plane.

The discharging portion 61 is arranged upward from the liquid spraying portion 90. The discharging portion 61 discharges at least a part of the liquid 40 sprayed by the spraying portion 14 in the liquid spraying portion 90.

The exhaust gas treatment apparatus 100 may further include a spinning portion 80. The spinning portion 80 may be disposed between the liquid spraying portion 90 and the discharging portion 61 in the travel direction E1 and the travel direction E2 of the exhaust gas 30. In the present example, the spinning portion 80 is disposed inside the exhaust gas discharging portion 91 (the exhaust gas passage portion 76). The spinning portion 80 of the present example increases speed of the exhaust gas 30 spinning in the exhaust gas passage portion 76. As described below, by increasing the speed of the exhaust gas 30, the liquid 40 contained in the exhaust gas 30 easily accumulates on the side wall 71 of the exhaust gas passage portion 76. The spinning portion 80 is a swirler, for example.

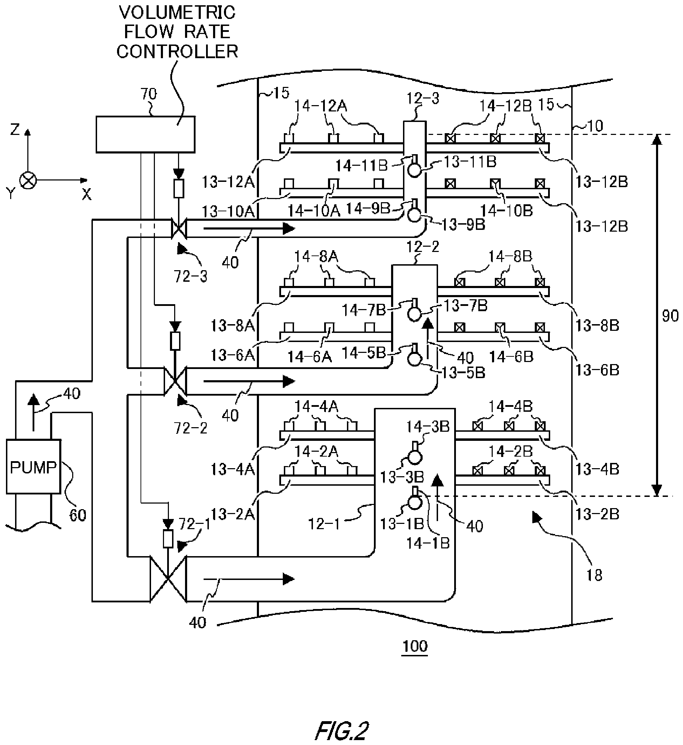

Fig. 2 is an enlarged view illustrating one example of the liquid spraying portion 90 of Fig. 1. The reaction tower 10 of the present example includes three trunk tubes 12 (a trunk tube 12-1, a trunk tube 12-2, and a trunk tube 12-3). In the present example, the trunk tube 12-1 and the trunk tube 12-3 are trunk tubes 12 respectively disposed on a side closest to the exhaust gas introduction port 11, and a side closest to the exhaust gas discharge port 17 in a direction parallel to the Z axis. In the present example, the trunk tube 12-2 is a trunk tube 12 disposed between the trunk tube 12-1 and the trunk tube 12-3 in the Z axis direction.

The reaction tower 10 of the present example includes branch tubes 13-1 to 13-12. In the present example, the branch tube 13-1 and the branch tube 13-12 are branch tubes 13 respectively disposed on a side closest to the exhaust gas introduction port 11, and a side closest to the exhaust gas discharge port 17 in a direction parallel to the Z axis. In the present example, the branch tube 13-1, the branch tube 13-3, the branch tube 13-5, the branch tube 13-7, the branch tube 13-9, and the branch tube 13-11 extend in the Y axis direction, and the branch tube 13-2, the branch tube 13-4, the branch tube 13-6, the branch tube 13-8, the branch tube 13-10, and the branch tube 13-12 extend in the X axis direction.

In the present example, the branch tubes 13-1 to 13-4 are connected to the trunk tube 12-1, the branch tubes 13-5 to 13-8 are connected to the trunk tube 12-2, and the branch tubes 13-9 to 13-12 are connected to the trunk tube 12-3. The branch tube 13-1, the branch tube 13-3, the branch tube 13-5, the branch tube 13-7, the branch tube 13-9, and the branch tube 13-11 may be arranged on both sides of the trunk tube 12 in a direction parallel to the Y axis. The branch tube 13-2, the branch tube 13-4, the branch tube 13-6, the branch tube 13-8, the branch tube 13-10, and the branch tube 13-12 may be arranged on both sides of the trunk tube 12 in a direction parallel to the X axis.

Using the branch tube 13-1 as an example for description, a branch tube 13-1A and a branch tube 13-1B are branch tubes 13-1 respectively arranged on one and the other sides of the trunk tube 12-1 in the direction parallel to the Y axis. In the direction parallel to the Y axis, the branch tube 13-1A and the branch tube 13-1B may be disposed so as to sandwich the trunk tube 12-1. Note that, in Fig. 2, the branch tube 13-1A and the branch tube 13-3A are not illustrated because they are arranged at positions overlapping the trunk tube 12-1.

Using the branch tube 13-2 as an example for description, a branch tube 13-2A and a branch tube 13-2B are branch tubes 13-2 respectively arranged on one and the other sides of the trunk tube 12-1 in the direction parallel to the X axis. In the direction parallel to the X axis, the branch tube 13-2A and the branch tube 13-2B may be disposed so as to sandwich the trunk tube 12-1.

The reaction tower 10 of the present example includes spraying portions 14-1 to 14-12. In the present example, the spraying portion 14-1 and the spraying portion 14-12 are spraying portions 14 respectively disposed on a side closest to the exhaust gas introduction port 11, and a side closest to the exhaust gas discharge port 17 in the direction parallel to the Z axis. The spraying portions 14-1 to 14-12 of the present example are respectively connected to the branch tubes 13-1 to 13-12. In one branch tube 13 extending in the Y axis direction, one side of the trunk tube 12 may be provided with a plurality of spraying portions 14, and the other side of the trunk tube 12 may be provided with a plurality of spraying portions 14 in the direction parallel to the Y axis. In one branch tube 13 extending in the X axis direction, one side of the trunk tube 12 may be provided with a plurality of spraying portions 14, and the other side of the trunk tube 12 may be provided with a plurality of spraying portions 14 in the direction parallel to the X axis. Note that, in Fig. 2, a spraying portion 14-1A, a spraying portion 14-3A, a spraying portion 14-5A, a spraying portion 14-7A, a spraying portion 14-9A, and a spraying portion 14-11A are not illustrated because they are arranged at positions overlapping the trunk tube 12.

The spraying portion 14 includes an opening surface for spraying the liquid 40. In Fig. 2, the opening surface is illustrated by a "×" sign. In one branch tube 13, each opening surface of the spraying portions 14 arranged on the one and the other sides of the trunk tube 12 may respectively face one and the other directions forming a predetermined angle θ (to be described below) with an extending direction of the branch tube 13. The angle θ may be from 30 to 90 degrees. The direction to which the opening surface faces is a central axis direction in a direction for the liquid 40 to be sprayed from the spraying portion 14.

The exhaust gas treatment apparatus 100 may include a pump 60, and a volumetric flow rate controller 70. The volumetric flow rate controller 70 controls a volumetric flow rate of the liquid 40 to be supplied to the reaction tower 10. The volumetric flow rate controller 70 may include a valve 72. In the present example, the volumetric flow rate controller 70 controls the volumetric flow rate of the liquid 40 to be supplied from the pump 60 to the spraying portion 14 by the valve 72. The volumetric flow rate controller 70 of the present example includes three valves 72 (a valve 72-1, a valve 72-2, and a valve 72-3). The volumetric flow rate controller 70 of the present example controls the volumetric flow rate of the liquid 40 to be supplied to the trunk tube 12-1, the trunk tube 12-2, and the trunk tube 12-3 by means of the valve 72-1, the valve 72-2, and the valve 72-3, respectively. The liquid 40 supplied to the trunk tube 12 passes through the branch tube 13, and then is sprayed from the spraying portion 14 into the reaction tower 10 (the gas treating portion 18).

The volumetric flow rate controller 70 may control the volumetric flow rate of the liquid 40 such that the volumetric flow rate of the liquid 40 to be supplied to the trunk tube 12-1 is greater than the volumetric flow rate of the liquid 40 to be supplied to the trunk tube 12-2. The volumetric flow rate controller 70 may control the volumetric flow rate of the liquid 40 such that the volumetric flow rate of the liquid 40 to be supplied to the trunk tube 12-2 is greater than the volumetric flow rate of the liquid 40 to be supplied to the trunk tube 12-3. For example, 1:2:9 is a ratio of the volumetric flow rate of the liquid 40 to be supplied to the trunk tube 12-3, the volumetric flow rate of the liquid 40 to be supplied to the trunk tube 12-2, and the volumetric flow rate of the liquid 40 to be supplied to the trunk tube 12-1.

As described above, the liquid 40 is sea water or an alkaline liquid, for example. If the liquid 40 is the alkaline liquid, the liquid 40 may be an alkaline liquid to which at least one of sodium hydroxide (NaOH) and sodium hydrogen carbonate (Na₂CO₃) is added.

The exhaust gas 30 contains harmful substances such as sulfur oxide (SOₓ). The sulfur oxide (SOₓ) is sulfurous acid gas (SO₂), for example. If the liquid 40 is a sodium hydroxide (NaOH) solution, a reaction between sulfurous acid gas (SO₂) contained in the exhaust gas 30 and sodium hydroxide (NaOH) is shown in the following Chemical Formula 1.

[Chemical Formula 1] SO₂ + Na⁺ + OH⁻ → Na + HSO₃⁻

As shown in Chemical Formula 1, the chemical reaction turns sulfurous acid gas (SO₂) into hydrogen sulfite ion (HSO₃⁻). This chemical reaction turns the liquid 40 into the exhausted liquid 46 containing hydrogen sulfite ion (HSO₃⁻). The exhausted liquid 46 may be discharged from the drainage pipe 20 to the outside of the exhaust gas treatment apparatus 100.

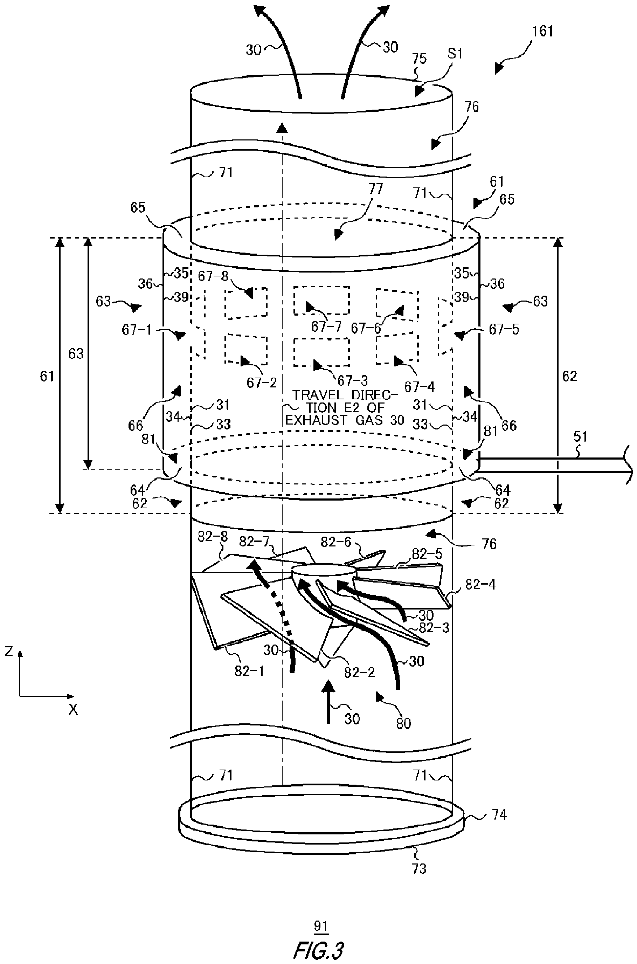

Fig. 3 is a perspective view illustrating one example of the exhaust gas discharging portion 91 of Fig. 1. As described above, the exhaust gas discharging portion 91 is disposed such that the central axis of the exhaust gas discharging portion 91 is not parallel to the horizontal direction. Hereinafter, a case is described by way of example, in which the central axis of the exhaust gas discharging portion 91 is parallel to the vertical direction. If the central axis of the exhaust gas discharging portion 91 is parallel to the vertical direction, the one end 73 side and the another end 75 side are respectively a bottom side and a top side of the exhaust gas discharging portion 91.

In the present example, the exhaust gas discharging portion 91 is provided with the discharging portion 61. The discharging portion 61 includes an internal tube portion 62, an external tube portion 63, and a bottom 64. The exhaust gas 30 passes through the internal tube portion 62. The external tube portion 63 is provided so as to surround the internal tube portion 62 as seen from the travel direction E2 of the exhaust gas 30. The internal tube portion 62 is provided inside the external tube portion 63 as seen from the travel direction E2 of the exhaust gas 30. The bottom 64 connects the internal tube portion 62 and the external tube portion 63. The bottom 64 is a part of the discharging portion 61 to which the liquid 40 falls in the discharging portion 61. The discharging portion 61 may include a ceiling 65. The ceiling 65 connects the internal tube portion 62 and the external tube portion 63 upward from the bottom 64.

The discharging portion 61 is formed of material having durability against the exhaust gas 30, and the liquid 40 and the exhausted liquid 46. The discharging portion 61 may be formed of the same material as the side wall 15 (refer to Fig. 1 and Fig. 2).

The bottom 64 includes a main portion 81. The main portion 81 will be described below.

The internal tube portion 62, the external tube portion 63, and the bottom 64 may be provided in a surrounding manner around at least a part of the exhaust gas passage portion 76 as seen from the travel direction E2 of the exhaust gas 30. In the present example, the internal tube portion 62, the external tube portion 63, and the bottom 64 are provided in a surrounding manner around the entire exhaust gas passage portion 76 as seen from the travel direction E2 of the exhaust gas 30.

The internal tube portion 62 includes a side wall 31, an internal surface 33, and an external surface 34. The internal surface 33 and the external surface 34 are one and the other surfaces of the side wall 31. The internal tube portion 62 includes an exhaust gas passage portion 77. The exhaust gas passage portion 77 is a space surrounded by the side wall 31 (internal surface 33). The side wall 31 may be a part of the side wall 71 extending from the one end 73 to the another end 75 in the exhaust gas discharging portion 91 in the travel direction E2 of the exhaust gas 30. The side wall 31 may be integrated with the side wall 71. The exhaust gas passage portion 77 may be a part of the exhaust gas passage portion 76 extending from the one end 73 to the another end 75 in the exhaust gas discharging portion 91 in the travel direction E2 of the exhaust gas 30.

The external tube portion 63 includes a side wall 39, and an internal surface 35 and an external surface 36. The internal surface 35 and the external surface 36 are one and the other surfaces of the side wall 39. In the discharging portion 61, a discharging space 66 is provided between the internal tube portion 62 and the external tube portion 63, and upward from the bottom 64. The discharging space 66 may be provided downward from the ceiling 65. The discharging space 66 is a space that is in a direct contact with the external surface 34 of the internal tube portion 62, the internal surface 35 of the external tube portion 63, and an upper surface of the bottom 64. The discharging space 66 may be a space that is in a direct contact with a lower surface of the ceiling 65. That is, the discharging space 66 may be a space surrounded by the external surface 34, the internal surface 35, the upper surface of the bottom 64, and the lower surface of the ceiling 65.

The internal tube portion 62 may include a window portion 67. In the present example, the window portion 67 penetrates the side wall 31 of the internal tube portion 62. In the present example, the window portion 67 connects the inside of the internal tube portion 62 (i.e. the exhaust gas passage portion 77) and the discharging space 66. The window portion 67 may be disposed upward from the bottom 64, and downward from the ceiling 65.

The internal tube portion 62 may include a plurality of window portions 67. In the present example, the internal tube portion 62 includes eight window portions 67 (window portions 67-1 to 67-8). The plurality of window portions 67 may be disposed in a surrounding manner around the exhaust gas passage portion 77 as seen from the travel direction E2 of the exhaust gas 30.

The smaller a droplet size of the liquid 40 is, the easier a contact area between the liquid 40 and the exhaust gas 30 is increased. Therefore, in order to remove the harmful substances such as sulfur oxide (SOₓ) contained in the exhaust gas 30, it is desirable that the liquid 40 to be sprayed from the spraying portion 14 (refer to Fig. 1 and Fig. 2) is in a misty form (misty). If the liquid 40 is in a misty form, a part of the liquid 40 sprayed on the exhaust gas 30 accompanies the exhaust gas 30 to spin and travel to the exhaust gas discharge port 17 (refer to Fig. 1), and thereby easily travels in a direction toward the exhaust gas discharge port 17 inside the reaction tower 10.

When the exhaust gas 30 spins inside the reaction tower 10 (refer to Fig. 1), the exhaust gas 30 is more likely to spin on an outer circumferential side (side wall 15 side (refer to Fig. 1)) of the reaction tower 10 rather than an inner circumferential side (central axis side) of the reaction tower 10, as seen from the travel direction E1 (refer to Fig. 1) of the exhaust gas 30. Similarly, when the exhaust gas 30 spins inside the exhaust gas discharging portion 91, the exhaust gas 30 is likely to spin on an outer circumferential side (side wall 71 side) of the exhaust gas discharging portion 91 rather than an inner circumferential side (central axis side) of the exhaust gas discharging portion 91, as seen from the travel direction E2 of the exhaust gas 30. As a result, the liquid 40 in the misty form, which is contained in the exhaust gas 30 spinning on the outer circumferential side (side wall 71 side) of the exhaust gas discharging portion 91, easily forms a liquid film on the side wall 71.

The liquid 40 that has formed the liquid film on the side wall 71 easily travels along the side wall 71 in a direction from the one end 73 to the another end 75 (i.e. upward) in the exhaust gas passage portion 76. This liquid 40 may contain hydrogen sulfite ion (HSO₃⁻) due to a direct contact with the exhaust gas 30. Therefore, if the liquid 40 containing hydrogen sulfite ion (HSO₃⁻) is discharged outside the exhaust gas treatment apparatus 100, the liquid 40 may corrode steel or other material outside the exhaust gas treatment apparatus 100.

In the exhaust gas treatment apparatus 100 of the present example, the exhaust gas discharging portion 91 is provided with the discharging portion 61. Therefore, the liquid 40 which travels along the side wall 71 and the side wall 31 in the direction from the one end 73 to the another end 75 can be discharged by the discharging portion 61. As a result, the exhaust gas treatment apparatus 100 of the present example can reduce the liquid 40 containing hydrogen sulfite ion (HSO₃⁻) to be discharged outside the exhaust gas treatment apparatus 100.

An area S1 is an area of the exhaust gas passage portion 76 in a direction intersecting the travel direction E2 (Z axis direction in the present example) of the exhaust gas 30 (XY plane direction in the present example). In Fig. 1, an area S2 is an area of the gas treating portion 18 in the liquid spraying portion 90. The area S2 is the area of the gas treating portion 18 in a direction intersecting the travel direction E1 (Z axis direction in the present example) of the exhaust gas 30 (XY plane direction in the present example).

The area S1 may be smaller than the area S2. If the area S1 is smaller than the area S2, according to the law of conservation of angular momentum, speed of the exhaust gas 30 spinning in the exhaust gas discharging portion 91 is likely to be greater than speed of the exhaust gas 30 spinning in the liquid spraying portion 90. The greater the speed of the exhaust gas 30 is, the easier the liquid 40 in the misty form contained in the exhaust gas 30 accumulates on the side wall 71 of the exhaust gas passage portion 76. Therefore, the greater the speed of the exhaust gas 30 is, the easier an amount of the liquid 40 to form the liquid film on the side wall 71 per unit time increases. The more the amount of the liquid 40 to form the liquid film on the side wall 71 per unit time increases, the easier an amount of the liquid 40 to be discharged outside the exhaust gas treatment apparatus 100 per unit time is reduced. Therefore, it is preferable that the area S1 is smaller than the area S2.

If the area S1 varies from the one end 73 to the another end 75 along the travel direction E2 of the exhaust gas 30, the area S1 may be the maximum value, the minimum value, an average value, or a median value of the area of the exhaust gas passage portion 76. If the area S2 varies from an exhaust gas introduction port 11 (refer to Fig. 1) side to an exhaust gas discharge port 17 (refer to Fig. 1) side of the liquid spraying portion 90 along the travel direction E1 of the exhaust gas 30, the area S1 may be the maximum value, the minimum value, an average value, or a median value of the area of the gas treating portion 18 in the liquid spraying portion 90.

The exhaust gas treatment apparatus 100 of the present example includes the spinning portion 80 between the liquid spraying portion 90 and the discharging portion 61 in the travel direction E1 and the travel direction E2 of the exhaust gas 30. In the present example, in the travel direction E2 of the exhaust gas 30, the spinning portion 80 is provided between the one end 73 and the discharging portion 61 inside the exhaust gas discharging portion 91 (exhaust gas passage portion 76).

The spinning portion 80 may include a plurality of wings 82. A wing 82 may be a tabular member having a front surface and a back surface. In the present example, the spinning portion 80 is a swirler. In the present example, the spinning portion 80 includes eight wings 82 (wings 82-1 to 82-8).

The eight wings 82 may be disposed in a surrounding manner around the central axis of the exhaust gas discharging portion 91. The wing 82 may be fixed on the side wall 71. The plurality of wings 82 may cover the entire exhaust gas passage portion 76 as seen from the travel direction E2 of the exhaust gas 30.

The exhaust gas 30 passes between two adjacent wings 82. In the wing 82, the front surface is on the another end 75 side, and the back surface is on the one end 73 side. Using the wing 82-2 as an example for description, the exhaust gas 30 passes between the front surface of the wing 82-2 and the back surface of the wing 82-3. In Fig. 3, this exhaust gas 30 is illustrated by a bold arrow.

Between the two adjacent wings 82, a distance between the two wings on the another end 75 side may be smaller than a distance between the two wings on the one end 73 side. Since the distance between the two wings on the another end 75 side is smaller than the distance between the two wings on the one end 73 side, speed of the exhaust gas 30 after passing through the spinning portion 80 easily becomes greater than speed of the exhaust gas 30 before passing through the spinning portion 80. Therefore, if the exhaust gas treatment apparatus 100 includes the spinning portion 80, the amount of the liquid 40 to form the liquid film on the side wall 71 per unit time is increased much easier as compared to a case in which the exhaust gas treatment apparatus 100 includes no spinning portion 80. As a result, it is preferable that the exhaust gas treatment apparatus 100 includes the spinning portion 80 between the liquid spraying portion 90 and the discharging portion 61 in the travel direction E1 and the travel direction E2 of the exhaust gas 30.

The discharging portion 61 discharges the liquid 40 to the discharging space 66. The liquid 40 that travels along the side wall 31 in the direction from the one end 73 to the another end 75 easily passes through the window portion 67 in a direction from the internal surface 33 to the external surface 34. The discharging portion 61 of the present example causes the liquid 40, which travels along the side wall 31 in the direction from the one end 73 to the another end 75, to pass through the window portion 67, and thereby discharges the liquid 40 to the discharging space 66. In the present example, the liquid 40 discharged to the discharging space 66 then falls to the bottom 64.

The discharge pipe 51 may be disposed downward from the window portion 67. The liquid 40 that has fallen to the bottom 64 is discharged by the discharge pipe 51.

The discharge pipe 51 is formed of material having durability against the liquid 40 and the exhausted liquid 46. The discharge pipe 51 may be formed of the same material as the side wall 15 (refer to Fig. 1 and Fig. 2).

The discharging portion 61 may be disposed in the reaction tower 10 (refer to Fig. 1). If the discharging portion 61 is disposed in the reaction tower 10, the discharging portion 61 may be disposed between the liquid spraying portion 90 (refer to Fig. 1) and the exhaust gas discharge port 17 (refer to Fig. 1) in the reaction tower 10.

The exhaust gas discharging portion 91 may be an independent liquid discharge unit 161. The discharging portion 61 may also be disposed in the liquid discharge unit 161. The liquid discharge unit 161 may be connected to the exhaust gas treatment apparatus 100 by fastening the fastening portion 74 of the liquid discharge unit 161 and the fastening portion 92 (refer to Fig. 1) of the exhaust gas treatment apparatus 100 together.

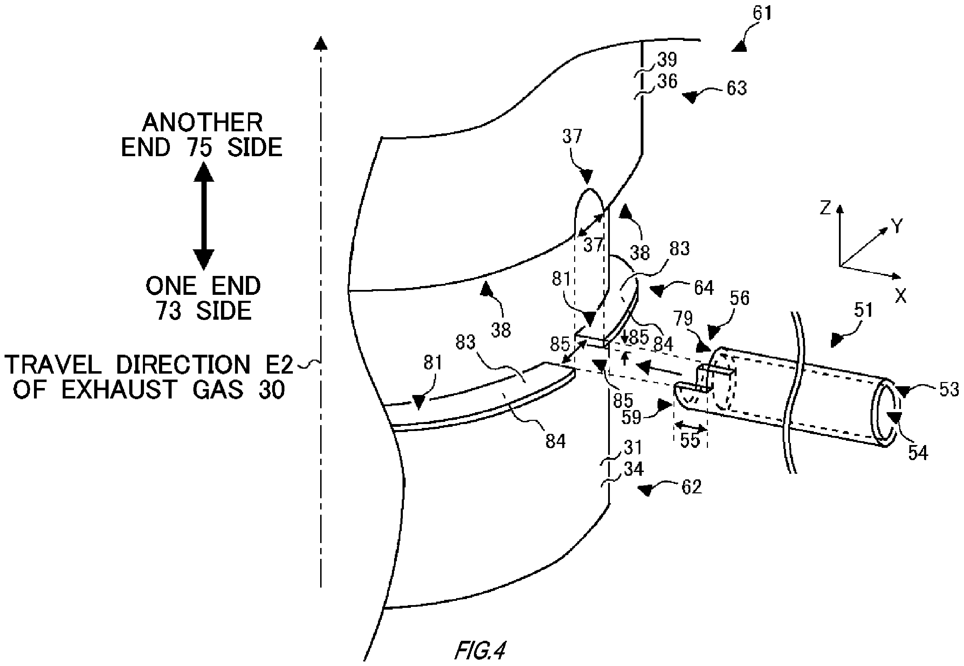

Fig. 4 is an enlarged perspective view of a connecting part between the discharging portion 61 and the discharge pipe 51 of Fig. 3. In Fig. 4, for a better understanding of the connecting part between the discharging portion 61 and the discharge pipe 51, the internal tube portion 62, the external tube portion 63, and the bottom 64, and the discharge pipe 51 are illustrated separately.

The external tube portion 63 may have an opening 37 to which the discharge pipe 51 is inserted. In the present example, the opening 37 penetrates the side wall 39 from the external surface 36 to the internal surface 35 on the side wall 39 of the external tube portion 63 (refer to Fig. 3). The opening 37 may be in a direct contact with a bottom end 38 on the side wall 39 of the external tube portion 63. If the bottom end 38 is provided downward from a lower surface 84 (to be described below) of the bottom 64, the opening 37 may be provided upward from the bottom end 38. In the present example, the opening 37 is in a notch shape being in a direct contact with the bottom end 38. In Fig. 4, a double-headed arrow illustrates a range of the opening 37 being in a direct contact with the bottom end 38. The bottom end 38 may be parallel to the XY plane (refer to Fig. 1).

The bottom 64 may be provided with a first notch 85. In the bottom 64, an upper surface 83 is on the another end 75 side, and a lower surface 84 is on the one end 73 side. The first notch 85 may penetrate the bottom 64 from the upper surface 83 to the lower surface 84 in the travel direction E2 of the exhaust gas 30. The upper surface 83 and the lower surface 84 may be parallel to the XY plane. In Fig. 4, double-headed arrows illustrate ranges of the first notch 85 in the XY plane and in the Z axis direction. In addition, in Fig. 4, dashed lines illustrate a correspondence of a position of the opening 37 to a position of the first notch 85 in a case in which the external tube portion 63 and the bottom 64 are connected. In Fig. 4, dashed lines illustrate a correspondence of a position of an edge 59 (to be described below) of the discharge pipe 51 to a position of the first notch 85 in a case in which the discharge pipe 51 is connected to the bottom 64.

As described above, the bottom 64 includes the main portion 81. The main portion 81 of the bottom 64 may be at least a part of the upper surface 83 disposed at the same height in the vertical direction, and may also be a part of the bottom 64 of which length occupies, in a flow path direction of the liquid 40 on the upper surface 83 (a direction along a circumference of the internal tube portion 62 in the present example), a half or more of a total length of the flow path of the liquid 40 reaching the first notch 85. In the example of Fig. 3, the liquid 40 that has fallen to the upper surface 83 of the bottom 64 travels clockwise or anti-clockwise around the internal tube portion 62, and then is discharged to the discharge pipe 51. In the example of Fig. 3, the total length of the flow path of the liquid 40 reaching the first notch 85 refers to a total length of flow paths of the liquid 40 travelling clockwise and anti-clockwise. The main portion 81 of the bottom 64 does not include a local concavity of the upper surface 83 (for example, a local dent on the upper surface 83). In the present example, as illustrated in Fig. 3, the entire bottom 64, which is disposed around the internal tube portion 62 in a surrounding manner, constitutes the main portion.

The bottom 64 may also be disposed around the internal tube portion 62 in a spirally surrounding manner. If the bottom 64 is disposed in the spirally surrounding manner, one end of the bottom 64 in a surrounding direction is disposed upward from another end in the vertical direction. If the bottom 64 is disposed in the spirally surrounding manner, the 83 of the bottom 64 may be inclined from the one end to the another end relative to the vertical direction. If the bottom 64 is disposed in the spirally surrounding manner, the discharge pipe 51 may be connected to the another end of the bottom 64.

The bottom end 38 of the external tube portion 63 is arranged downward from the upper surface 83 of the bottom 64. The bottom end 38 may be arranged at the same position as the lower surface 84 of the bottom 64, or may be arranged downward from the lower surface 84 in the travel direction E2 of the exhaust gas 30 (Z axis direction).

The first notch 85 corresponds to the opening 37. The first notch 85 corresponding to the opening 37 refers to that the position of the first notch 85 matches the position of the opening 37 in the XY plane and the Z axis direction. The discharge pipe 51 is connected to the first notch 85. The discharge pipe 51 is connected to the opening 37.

The discharge pipe 51 includes a pipe wall 53 and a liquid passage portion 54. The liquid passage portion 54 is a space surrounded by the pipe wall 53. The liquid passage portion 54 is the space through which the liquid 40 discharged to the discharging space 66 (refer to Fig. 3) passes.

An X axis direction is an extending direction (central axis direction) of the discharge pipe 51. In the X axis direction, an edge 59 is one end of the discharge pipe 51 on a side to be connected to the discharging portion 61.

The discharge pipe 51 may include an inserting part 55. The discharge pipe 51 is provided with a second notch 56 on the pipe wall 53 above the inserting part 55. In Fig. 4, an end 79 is an end of the second notch 56 on an opposite side of the edge 59 in the X axis direction. Also, the end 79 is the end on the edge 59 side of the pipe wall 53 upward from the second notch 56. Providing the second notch 56 on the pipe wall 53 above the inserting part 55 refers to that the pipe wall 53 above the inserting part 55 is cut off from the edge 59 to the end 79 in the X axis direction, and thereby there is no pipe wall 53 above at least a part of the inserting part 55.

In the extending direction of the discharge pipe 51 (X axis direction in the present example), a distance between the edge 59 and the end 79 may be equal to or shorter than a distance between the external surface 34 on the side wall 31 of the internal tube portion 62 and the internal surface 35 on the side wall 39 of the external tube portion 63. In the extending direction of the discharge pipe 51 (X axis direction in the present example), the distance between the edge 59 and the end 79 may also be shorter than a distance between the external surface 34 and the external surface 36 on the side wall 39 of the external tube portion 63.

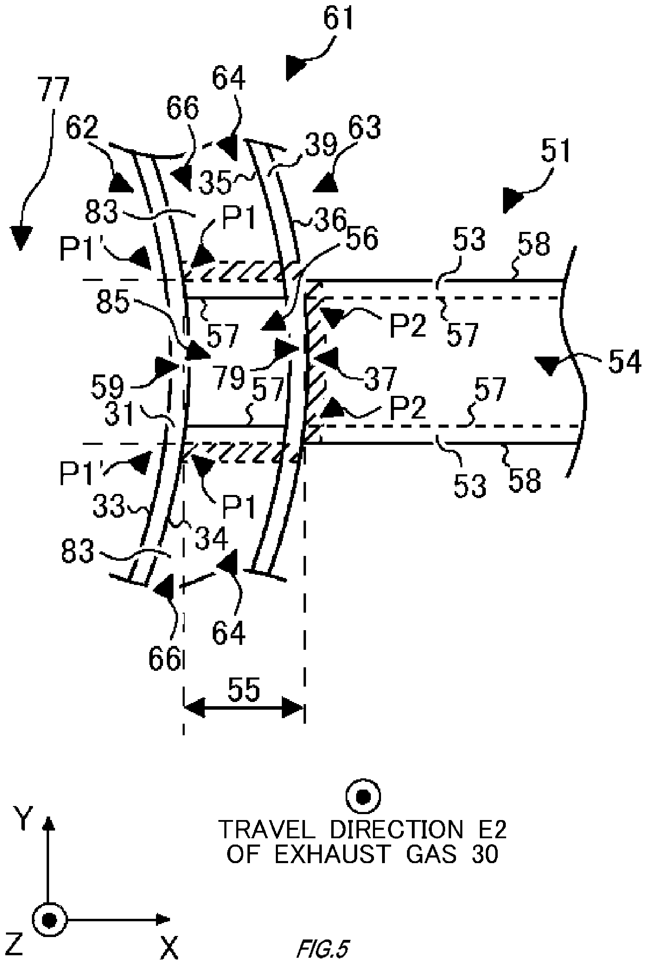

Fig. 5 illustrates one example of the connecting part between the discharging portion 61 and the discharge pipe 51, in which the discharging portion 61 and the discharge pipe 51 illustrated in Fig. 4 have been connected, as seen from the travel direction E2 of the exhaust gas 30 (Z axis direction). Fig. 5 illustrates the connecting part between the discharging portion 61 and the discharge pipe 51, which is seen at a position downward from the ceiling 65 (refer to Fig. 3) in the Z axis direction, and upward from the bottom 64.

The discharge pipe 51 of the liquid passage portion 54 may penetrate the external tube portion 63 and thereby be connected to the discharging space 66. In the present example, the liquid passage portion 54 penetrates the side wall 39 of the external tube portion 63 in the X axis direction, and thereby be connected to the discharging space 66. Since the liquid passage portion 54 penetrates the external tube portion 63 and thereby is connected to the discharging space 66, the liquid 40 that has been discharged to the discharging space 66 and fallen to the upper surface 83 of the bottom 64 easily flows to a part of the liquid passage portion 54 connected to the discharging space 66.

The discharge pipe 51 may penetrate the external tube portion 63, and be in a direct contact with the internal tube portion 62. The edge 59 of the discharge pipe 51 may be in a direct contact with the internal tube portion 62. If the discharge pipe 51 is in a direct contact with the internal tube portion 62, a length of the part of the liquid passage portion 54 connected to the discharging space 66 is the longest in the X axis direction. As a result, the liquid 40 that has been discharged to the discharging space 66 and fallen to the upper surface 83 of the bottom 64 is much easier to flow to this part of the liquid passage portion 54.

The pipe wall 53 of the discharge pipe 51 includes an internal surface 57 and an external surface 58. The liquid passage portion 54 is a space surrounded by the internal surface 57. In Fig. 5, finely dashed lines illustrate a position of the internal surface 57 outside the discharging portion 61. Inside the discharging portion 61, the external surface 58 is arranged below the bottom 64. In Fig. 5, finely dashed lines illustrate a position of the external surface arranged below the bottom 64.

In the X axis direction, a position PI is a position at which the external surface 58 on the pipe wall 53 of the discharge pipe 51 comes into a direct contact with the external surface 34 on the side wall 31 of the internal tube portion 62. In the X axis direction, a position P2 is a position at which the internal surface 57 on the pipe wall 53 of the discharge pipe 51, and the external surface 36 on the side wall 39 of the external tube portion 63 intersect. In the present example, the inserting part 55 of the discharge pipe 51 is a part of the discharge pipe 51 between the position PI and the position P2 in the X axis direction. In Fig. 5, a double-headed arrow illustrates a range of the inserting part 55 in the X axis direction. In the present example, the inserting part 55 of the discharge pipe 51 is arranged inside the discharging portion 61.

As seen from the travel direction E2 of the exhaust gas 30 (Z axis direction), at least a part of the first notch 85 of the bottom 64, and at least a part of the second notch 56 of the discharge pipe 51 may overlap each other. In the present example, as seen from the travel direction E2 of the exhaust gas 30 (Z axis direction), the entire first notch 85 and the entire second notch 56 overlap each other. In the present example, as seen from the travel direction E2 of the exhaust gas 30 (Z axis direction), the position of the first notch 85 matches the position of the second notch 56.

As seen from a direction from the exhaust gas discharge port 17 (refer to Fig. 1) to the exhaust gas introduction port 11 (refer to Fig. 1) (a direction opposite to the travel direction E2 of the exhaust gas 30 (Z axis direction)), a curvature of the edge 59 of the inserting part 55 may be equal to a curvature of the internal tube portion 62. In the present example, as seen from the travel direction E2 of the exhaust gas 30, the curvature of the edge 59 and the curvature of the external surface 34 of the internal tube portion 62 are equal. In Fig. 5, a curved line illustrating the curved edge 59, and a curved line illustrating the external surface 34 with which the edge 59 is in a direct contact may overlap each other. That is, the curved edge 59 may entirely be in a direct contact with the external surface 34, as seen from the travel direction E2 of the exhaust gas 30. As seen from the travel direction E2 of the exhaust gas 30, since the curvature of the edge 59 is equal to the curvature of the internal tube portion 62, the liquid 40 that has been discharged to the discharging space 66 and fallen to the upper surface 83 of the bottom 64 is less likely to flow outside the discharging space 66.

The opening 37 on the side wall 39 of the external tube portion 63 may be in a direct contact with the liquid passage portion 54 on the end 79 of the discharge pipe 51. Since the opening 37 is in a direct contact with the liquid passage portion 54 on the end 79, the liquid 40 that has been discharged to the discharging space 66 and fallen to the upper surface 83 of the bottom 64 easily flows to the liquid passage portion 54.

The discharging portion 61 and the discharge pipe 51 are connected so as to seal the discharging space 66. Since the discharging portion 61 and the discharge pipe 51 are connected so as to seal the discharging space 66, the liquid 40 that has been discharged to the discharging space 66 and fallen to the upper surface 83 of the bottom 64 is less likely to flow outside the discharging space 66 except the liquid passage portion 54.

A contacting part between the external surface 58 on the pipe wall 53 of the discharge pipe 51, and the lower surface 84 (refer to Fig. 4) of the bottom 64 may be welded. A contacting part between the end 79 on the pipe wall 53 of the discharge pipe 51, and the external surface 36 on the side wall 39 of the external tube portion 63 may be welded. In Fig. 5, these welding parts are illustrated by hatching. The discharging space 66 may be sealed by welding the discharging portion 61 and the discharge pipe 51 together.

In Fig. 5, coarsely dashed lines illustrate extending lines of the external surface 58 in the X axis direction. These dashed lines extend from the position PI to the exhaust gas passage portion 77 side in the X axis direction. In the X axis direction, a position P1' is a position at which the dashed lines and the internal surface 33 of the internal tube portion 62 intersect.

The inserting part 55 of the discharge pipe 51 may also be a part of the discharge pipe 51 between the position P1' and the position P2 in the X axis direction. The discharge pipe 51 may be in a direct contact with the internal surface 33 of the internal tube portion 62.

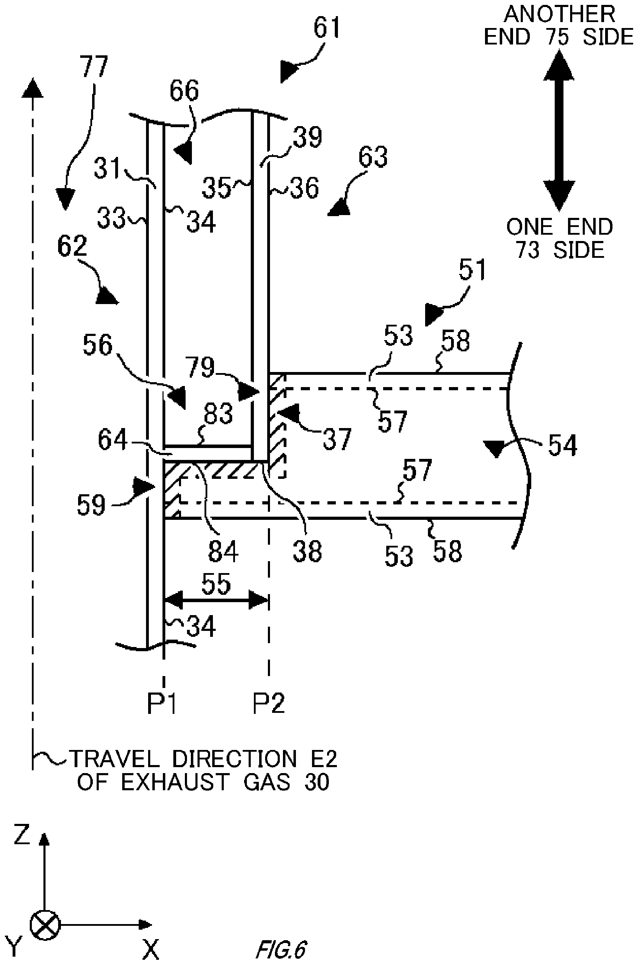

Fig. 6 illustrates one example of the connecting part between the discharging portion 61 and the discharge pipe 51, in which the discharging portion 61 and the discharge pipe 51 illustrated in Fig. 4 and Fig. 5 have been connected, as seen in the Y axis direction. As described above, in the travel direction E2 of the exhaust gas 30 (Z axis direction), a position of the bottom end 38 of the side wall 39 may match the position of the lower surface 84 of the bottom 64.

As described above, in the present example, the edge 59 of the discharge pipe 51 is in a direct contact with the external surface 34 on the side wall 31 of the internal tube portion 62. In the present example, the end 79 of the discharge pipe 51 is in a direct contact with the external surface 36 on the side wall 39 of the external tube portion 63. In Fig. 6, the connecting part between the discharging portion 61 and the discharge pipe 51 is illustrated by hatching. This connecting part may also be a welded part. In the present example, the opening 37 on the side wall 39 of the external tube portion 63 is in a direct contact with the liquid passage portion 54 on the end 79 of the discharge pipe 51.

The liquid passage portion 54 on the inserting part 55 of the discharge pipe 51 is arranged below the discharging space 66. Since the discharge pipe 51 penetrates the external tube portion 63 and thereby is connected to the discharging space 66, the discharging space 66 communicates with the liquid passage portion 54 below the discharging space 66. Therefore, the liquid 40 that has been discharged to the discharging space 66 and fallen to the upper surface 83 of the bottom 64 easily falls to the liquid passage portion 54 below the discharging space 66. As a result, the liquid 40 that has fallen to the upper surface 83 is less likely to remain on the upper surface 83.

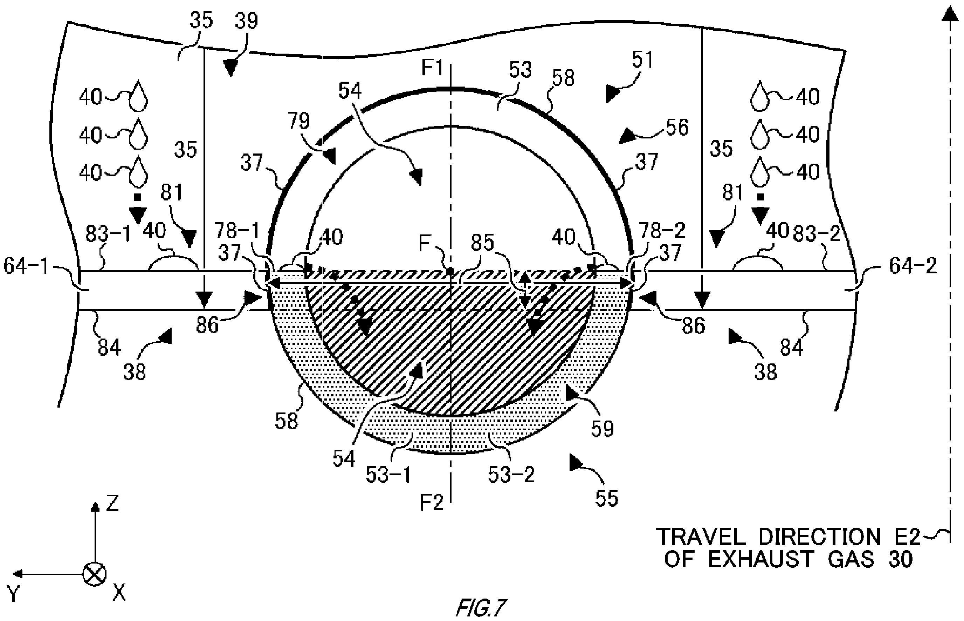

Fig. 7 illustrates one example of the connecting part between the discharging portion 61 and the discharge pipe 51 of Fig. 5 and Fig. 6 as seen in the X axis direction. At least a part of the liquid passage portion 54 that penetrates the external tube portion 63 (refer to Fig. 4 to Fig. 6) is arranged downward from the upper surface 83 of the main portion 81 of the bottom 64. The liquid passage portion 54 that penetrates the external tube portion 63 (refer to Fig. 4 to Fig. 6) may refer to a part of the liquid passage portion 54 arranged in the discharging space 66 (refer to Fig. 4 to Fig. 6). The liquid passage portion 54 that penetrates the external tube portion 63 may also refer to a part of the liquid passage portion 54 included in the inserting part 55. In the present example, oblique hatching lines illustrate the part of the liquid passage portion 54 arranged downward from the upper surface 83 of the main portion 81 of the bottom 64.

In Fig. 7, the edge 59 of the discharge pipe 51 is illustrated by hatching different from the hatching illustrating the part of the liquid passage portion 54. In the present example, the edge 59 is the edge of the inserting part 55. In Fig. 7, the end 79 of the second notch 56 is illustrated without hatching. In the present example, the part of the liquid passage portion 54 arranged downward from the upper surface 83 of the main portion 81 of the bottom 64 is a part of the liquid passage portion 54 arrange below the second notch 56.

As described above, the liquid 40 with which the exhaust gas 30 has been treated may contain hydrogen sulfite ion (HSO₃⁻). Therefore, if this liquid 40 remains on the upper surface 83 of the bottom 64, this liquid 40 may corrode the discharging portion 61 (at least any of the bottom 64, the internal tube portion 62, and the external tube portion 63). In the exhaust gas treatment apparatus 100 of the present example, at least the part of the liquid passage portion 54 that penetrates the external tube portion 63 (refer to Fig. 4 to Fig. 6) is arranged downward from the upper surface 83 of the main portion 81 of the bottom 64. Therefore, the liquid 40 that has flown on the upper surface 83 of the bottom 64 easily flows into the liquid passage portion 54. As a result, the liquid 40 is less likely to remain on the upper surface 83. Furthermore, the exhaust gas treatment apparatus 100 of the present example easily reduce corrosion of the discharging portion 61 caused by the liquid 40 with which the exhaust gas 30 is treated.

In Fig. 7, a bold solid line illustrates an outer edge of the opening 37 on the side wall 39 of the external tube portion 63 (refer to Fig. 4 to Fig. 6). In Fig. 7, a position of the opening 37, and a part of the external surface 58 on the pipe wall 53 of the discharge pipe 51, which is disposed upward from the bottom end 38 of the side wall 39 overlap each other. That is, in the present example, this part of the external surface 58 is in a direct contact with the opening 37.

In Fig. 7, double-headed arrows illustrate ranges of the first notch 85 in the Y axis direction and the Z axis direction, which is disposed on the bottom 64. An end 86 is an end of the bottom 64, which is in a direct contact with the first notch 85. In the present example, the end 86 is the end of the bottom 64 arranged on both ends of the first notch 85 in a direction parallel to the Y axis. In the present example, the end 86 is in a direct contact with the first notch 85. In Fig. 7, the end 86 of the present example is arranged at a position overlapping a part of the opening 37.

An upper end 78 is an upper end of the pipe wall 53 below the second notch 56 of the discharge pipe 51. The upper end 78 refers to an uppermost end of the pipe wall 53 below the second notch 56 in the vertical direction (Z axis direction in the present example). The upper end 78 may be a planar region, or may be a linear region extending in the horizontal direction (direction within the XY plane in the present example) and the central axis direction of the discharge pipe 51. The upper end 78 of the present example is a planar region parallel to the XY plane.

On a cross-section of the discharge pipe 51 (cross-section YZ in the present example), a position F is a position of the centre of mass of the discharge pipe 51. In the present example, the position F is a central position on a cross-section of the circular liquid passage portion 54. A line F1-F2 is a straight line passing through the position F in the vertical direction. In Fig. 7, the line F1-F2 is illustrated by a chain line.

In Fig. 7, a pipe wall 53-1 and a pipe wall 53-2 are one and the other sides of the pipe wall 53 in the Y axis direction, respectively. On the cross-section YZ, the pipe wall 53-1 and the pipe wall 53-2 are the pipe wall 53 arranged on one and the other sides from a bottom end on the external surface 58 of the discharge pipe 51, respectively. In Fig. 7, the bottom end on the external surface 58 of the discharge pipe 51 is, between two intersection points of the line F1-F2 and the external surface 58, the lower intersection point.

In Fig. 7, an upper end 78-1 and an upper end 78-2 are one and the other sides of the upper end 78 in the Y axis direction, respectively. The upper end 78-1 and the upper end 78-2 are the upper end 78 of the pipe wall 53-1 and the upper end 78 of the pipe wall 53-2, respectively. A position of the upper end 78-1 and a position of the upper end 78-2 in the Z axis direction (a height of the upper end 78-1 and a height of the upper end 78-2 in the vertical direction) may be equal to or may be different from each other.

As seen in a direction intersecting with the cross-section of the discharge pipe 51 (as seen in the X axis direction in the present example), the upper end 78 may either be arranged at the same height as the upper surface 83 of the bottom 64, or downward from the upper surface 83 of the bottom 64. In the present example, the upper end 78 is arranges at the same height as the upper surface 83 of the bottom 64. Since the upper end 78 is arranged either at the same height as the upper surface 83 of the bottom 64, or downward from the upper surface 83 of the bottom 64, the liquid 40 that has fallen to the upper surface 83 of the bottom 64 is less likely to remain on the upper surface 83 above the end 86.

In Fig. 7, a bottom 64-1 and a bottom 64-2 are one and the other sides of the bottom 64 in the Y axis direction, respectively. An upper surface 83-1 is an upper surface 83 of the bottom 64-1, and an upper surface 83-2 is an upper surface 83 of the bottom 64-2. If positions of the upper surface 83-1 and the upper surface 83-2 are different in the Z axis direction (if heights of the upper surface 83-1 and the upper surface 83-2 are different from each other), the upper end 78-1 may either be arranged at the same height as the upper surface 83-1, or downward from the upper surface 83-1, and the upper end 78-2 may either be arranged at the same height as the upper surface 83-2, or downward from the upper surface 83-2.

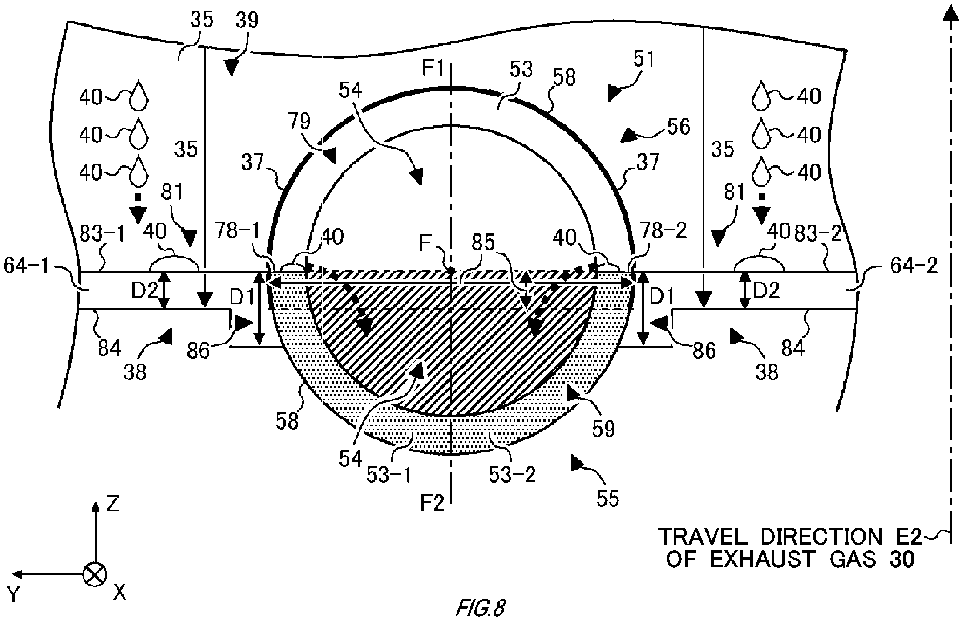

Fig. 8 illustrates another example of the connecting part between the discharging portion 61 and the discharge pipe 51 of Fig. 5 and Fig. 6 as seen in the X axis direction. In the present example, a thickness D1 is a thickness of the end 86 in a direction from the upper surface 83 to the lower surface 84 of the bottom 64. In the present example, a thickness D2 is a thickness between the upper surface 83 and the lower surface 84 of the bottom 64 excluding the end 86. In the present example, the thickness D1 is greater than the thickness D2. The bottom 64 of the present example is different from the bottom 64 illustrated in Fig. 7 in this way.

In the present example, the upper end 78 of the discharge pipe 51 may be arranged below the upper surface 83 of the bottom 64 within a range of the thickness D2. In the present example, since the thickness D1 of the end 86 is greater than the thickness D2, a range in which the upper end 78 can be arranged is likely to be wider than that of the example illustrated in Fig. 7. Therefore, in the present example, the bottom 64 and the discharge pipe 51 are connected to each other easier than those of the example illustrated in Fig. 7.

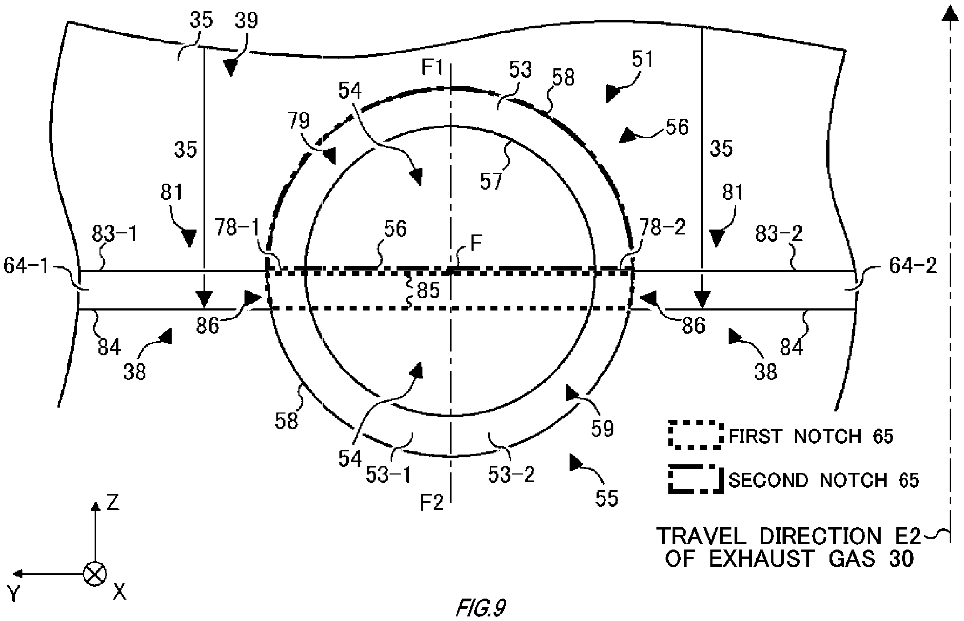

Fig. 9 illustrates one example of the connecting part between the discharging portion 61 and the discharge pipe 51 of Fig. 5 and Fig. 6 as seen in the X axis direction. Fig. 9 is the same as Fig. 7, except that a reference number for the opening 37 is omitted, and the opening 37 is not illustrated by a solid line. In addition, the liquid 40 is omitted from the illustration in Fig. 9. In Fig. 9, a bold dashed line and a bold chain line respectively illustrate a range of the first notch 85 and a range of the second notch 56, when the discharge pipe 51 is seen in the X axis direction. The range of the first notch 85 in the Z axis direction may be between a position of the upper surface 83 and the position of the lower surface 84 of the bottom 64.

The second notch 56 of the discharge pipe 51 may be connected to the first notch 85 of the bottom 64. Fig. 9 is one example of a connection between the first notch 85 and the second notch 56.

In the present example, an upper end of the first notch 85 is in a direct contact with a bottom end of the second notch 56. In the Z axis direction, a position of the bottom end of the second notch 56 is the same as a position of the upper end 78 on the pipe wall 53 below the second notch 56. In the present example, a position of the upper end of the first notch 85 matches the position of the upper end 78. In the present example, the first notch 85 and the second notch 56 do not overlap each other when the discharge pipe 51 is seen in the X axis direction.

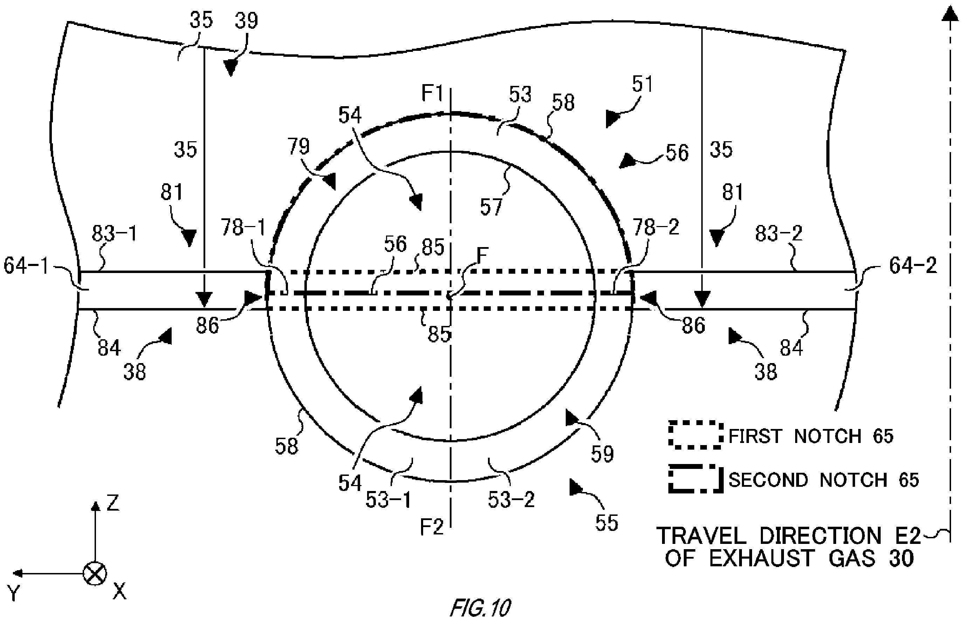

Fig. 10 illustrates another example of the connecting part between the discharging portion 61 and the discharge pipe 51 of Fig. 5 and Fig. 6, as seen in the X axis direction. Fig. 10 is another example of the connection between the first notch 85 and the second notch 56.

In the present example, the upper end 78 of the pipe wall 53 is arranged downward from the upper end of the first notch 85. In the present example, the upper end 78 is arranged between the upper end and the bottom end of the first notch 85 in the Z axis direction. In the present example, a part of the first notch 85 and a part of the second notch 56 overlap each other, when the discharge pipe 51 is seen in the X axis direction. The upper end 78 of the pipe wall 53 may be arranged between the upper end and the bottom end of the first notch 85 in the Z axis direction.

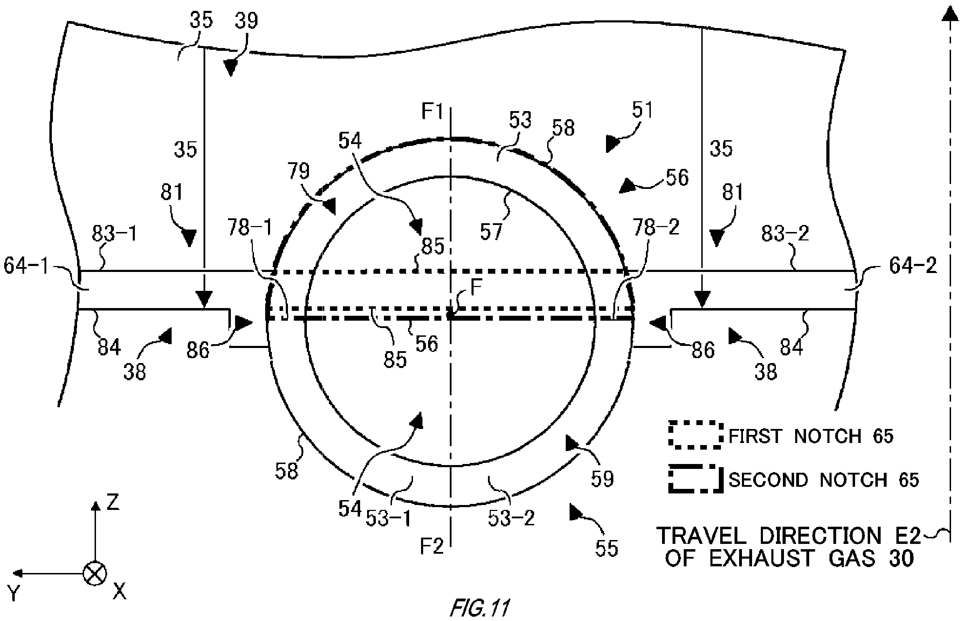

Fig. 11 illustrates another example of the connecting part between the discharging portion 61 and the discharge pipe 51 of Fig. 5 and Fig. 6, as seen in the X axis direction. Fig. 11 is another example of the connection between the first notch 85 and the second notch 56. In the present example, the thickness D1 (refer to Fig. 8) is a thickness of the end 86 of the bottom 64.

In the present example, the upper end 78 of the pipe wall 53 is arranged downward from the bottom end of the first notch 85. In the present example, the entire first notch 85 and a part of the second notch 56 overlap each other, when the discharge pipe 51 is seen in the X axis direction. If the thickness of the end 86 is greater than the thickness D2 (refer to Fig. 8) (for example, if the thickness of the end 86 is the thickness D1), the upper end 78 may be arranged downward from the bottom end of the first notch 85. If the thickness of the end 86 is greater than the thickness D2, the upper end 78 may be arranged between the upper end of the first notch 85 and the bottom end of the end 86.

Herein, the second notch 56 being connected to the first notch 85 also refers to any of the examples illustrated in Fig. 9 to Fig. 11. The upper end 78 of the pipe wall 53 may be arranged at a position upward from the bottom end of the end 86 of the bottom 64, and on the upper end (upper surface 83) of the bottom 64 or below in the Z axis direction.

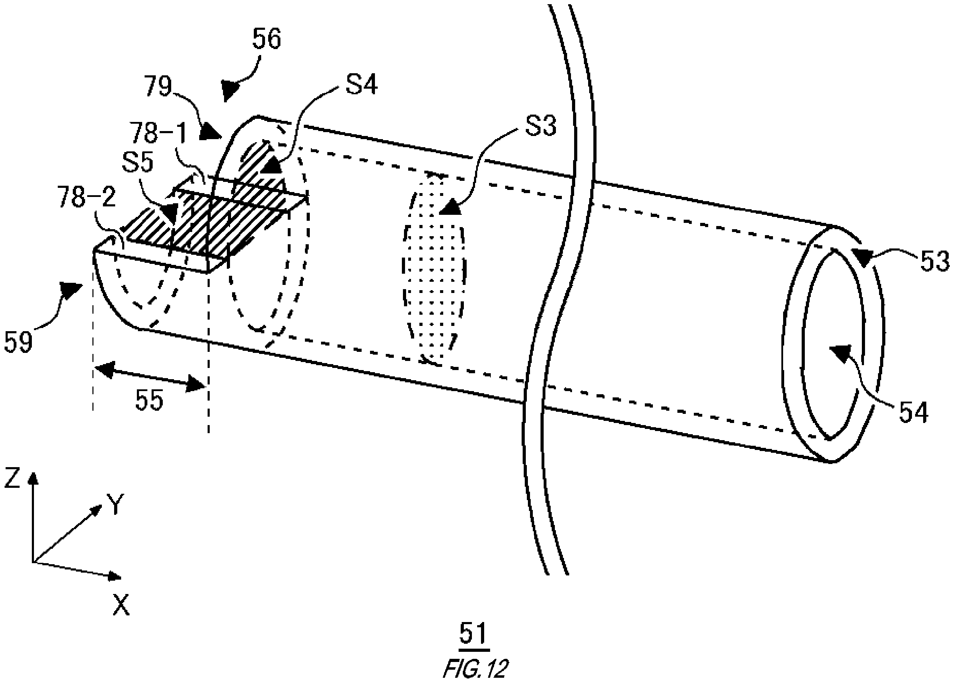

Fig. 12 is an enlarged perspective view of the discharge pipe 51 illustrated in Fig. 4. An area S3 is a cross-sectional area of the liquid passage portion 54. The cross-sectional area of the liquid passage portion 54 is an area of the liquid passage portion 54 on a cross-section perpendicular to the central axis of the discharge pipe 51 (X axis in the present example). In Fig. 12, a region corresponding to the area S3 is illustrated by hatching.

An area S4 is an area of the second notch 56 in a direction intersecting the central axis of the discharge pipe 51. The area S4 is an area of the liquid passage portion 54 in the direction intersecting the central axis of the discharge pipe 51. In the present example, the area S4 is an area of a cross-section YZ of the liquid passage portion 54 on an end 79 of the second notch 56.

An area S5 is an area of the second notch 56 in the central axis direction of the discharge pipe 51. The area S5 is an area of the liquid passage portion 54 in the central axis direction of the discharge pipe 51. In the present example, the area S5 is an area of a cross-section XY of the liquid passage portion 54 on the upper end 78 (the bottom end of the second notch 56).

An area SC is an area of the second notch 56. Herein, the area SC refers to the sum of the area S4 and the area S5. In Fig. 12, a region corresponding to the area SC is illustrated by hatching different from the hatching illustrating area S3.

The area SC may be equal to or greater than the area S3. The liquid 40 that has been discharged to the discharging space 66 (refer to Fig. 4 to Fig. 6) and fallen to the upper surface 83 of the bottom 64 (refer to Fig. 4 to Fig. 11) passes through the region corresponding to the area SC, and then flows in the liquid passage portion 54 to an opposite side of the edge 59 from the second notch 56. Therefore, since the area SC is equal to or greater than the area S3, the liquid 40 that has fallen to the upper surface 83 of the bottom 64 (refer to Fig. 4 to Fig. 11) is less likely to remain on the upper surface 83. The area SC is preferably greater than the area S3. The greater the area SC is than the area S3, the much less likely the liquid 40 is to remain on the upper surface 83.

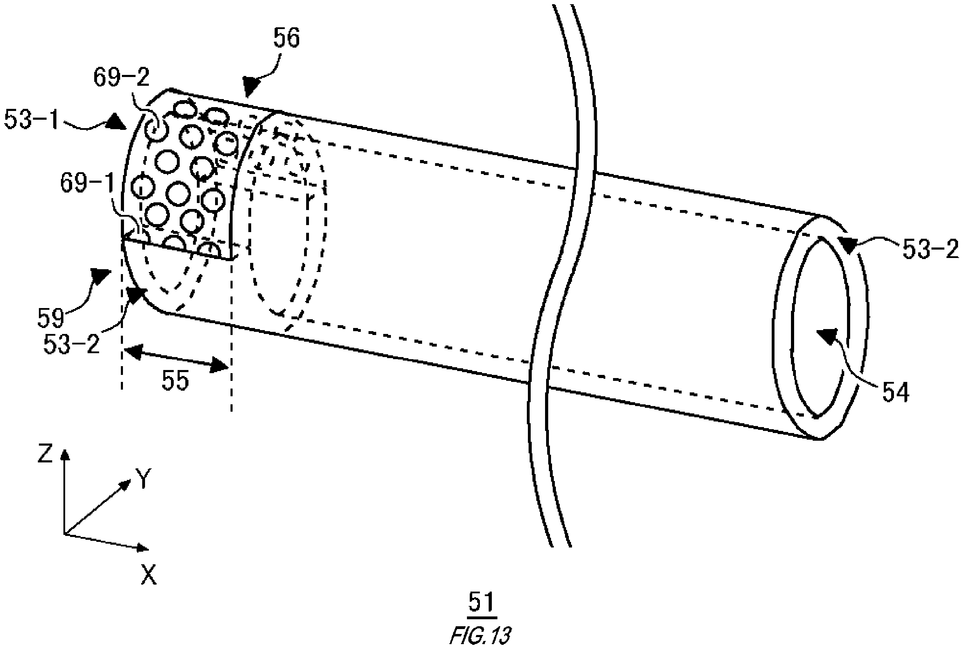

Fig. 13 is a perspective view illustrating another example of the discharge pipe 51. The discharge pipe 51 of the present example is provided with the pipe wall 53 at a position for the second notch 56 of the example in Fig. 12. This pipe wall 53 is illustrated as a pipe wall 53-1, and the pipe wall 53 excluding the pipe wall 53-1 is illustrated as a pipe wall 53-2.

The discharge pipe 51 of the present example has an opening 69 on the pipe wall 53-1. The discharge pipe 51 of the present example is different from the discharge pipe 51 illustrated in Fig. 12 in this way. The opening 69 of the present example penetrates the pipe wall 53. In the present example, the outside of the discharge pipe 51 and the liquid passage portion 54 are communicated by the opening 69.

The pipe wall 53-1 may have a plurality of openings 69. The pipe wall 53-1 may be perforated metal. The pipe wall 53-1 may also be wire mesh netting.

Since the discharge pipe 51 of the present example includes the pipe wall 53-1 having the opening 69, the liquid 40 that has been discharged to the discharging space 66 (refer to Fig. 4 to Fig. 6) and fallen in a direction from above the bottom 64 to the upper surface 83 (refer to Fig. 4 to Fig. 6) passes through the opening 69, and then is easily discharged from the discharge pipe 51.

Some openings 69 among the plurality of the openings 69 are preferably in a direct contact with the upper end 78 (refer to Fig. 12). The some opening 69 is illustrated as an opening 69-1, and the opening 69 excluding the opening 69-1 is illustrated as an opening 69-2. Since the pipe wall 53 has the opening 69-1, the liquid 40 that has fallen to the upper surface 83 of the bottom 64 (refer to Fig. 4 to Fig. 6) easily flows from the upper surface 83 to the liquid passage portion 54.

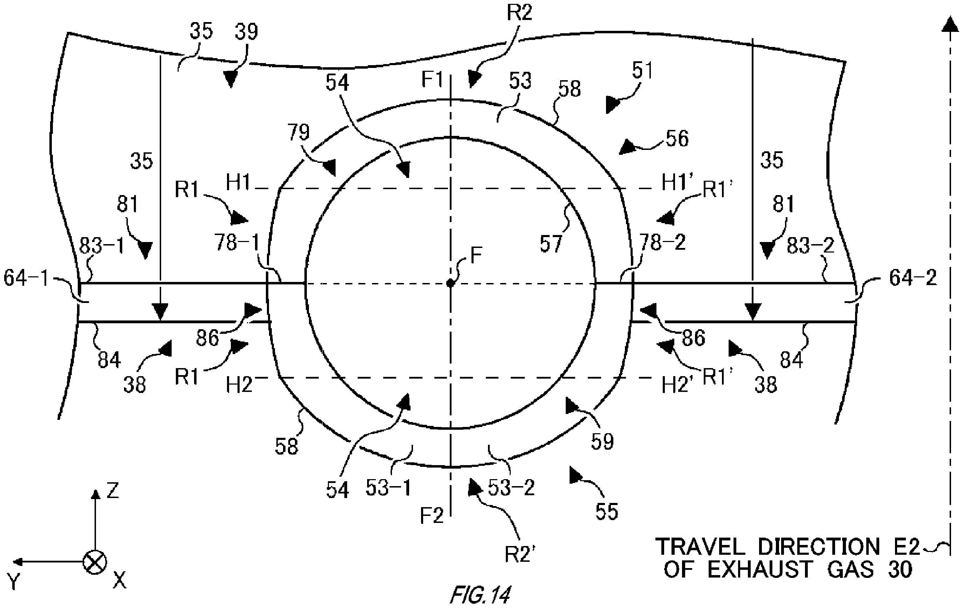

Fig. 14 illustrates another example of the connecting part between the discharging portion 61 and the discharge pipe 51 of Fig. 5 and Fig. 6 as seen in the X axis direction. In Fig. 14, illustrations of a reference number for the opening 37 and a solid line illustrating the opening 37, and the liquid 40 of Fig. 7 are omitted.

In a cross-section of the discharge pipe 51, a curvature R1 and a curvature R1' are curvatures of parts of the pipe wall 53 of the discharge pipe 51, which are in a direct contact with the bottom 64. In the cross-section of the discharge pipe 51, a curvature R2 and a curvature R2' are curvatures of the other part of the pipe wall 53 excluding the above parts.

In Fig. 14, a line H1-H1' is a straight line extending in a direction intersecting the line F1-F2 upward from the upper surface 83 of the bottom 64 and downward from the upper end of the discharge pipe 51. In Fig. 14, a line H2-H2' is a straight line extending in the direction intersecting the line F1-F2 downward from the lower surface 84 of the bottom 64 and upward from the bottom end of the discharge pipe 51. In the present example, the line H1-H1' and the line H2-H2' are parallel to the upper surface 83.

In the cross-section of the discharge pipe 51, the curvature R1 is the curvature of the external surface 58 of the discharge pipe 51 between H2 and H1. In this cross-section, the curvature R1' is the curvature of the external surface 58 between H2' and H1'. In this cross-section, the curvature R2 is the curvature of the external surface 58 between H1 and H1'. In this cross-section, the curvature R2' is the curvature of the external surface 58 between H2 and H2'.

In the present example, the curvature R1 is greater than the curvature R2 and the curvature R2', and the curvature R1' is greater than the curvature R2 and the curvature R2'. The discharge pipe 51 of the present example is different from the discharge pipe illustrated in Fig. 7 in this way. In the present example, both of the curvature R1 and the curvature R1' are greater than the curvature R2 and the curvature R2', however, any one of the curvature R1 and the curvature R1' may be greater than the curvature R2 and the curvature R2'. Since the curvature R1 being the part of curvatures of the pipe wall 53 of the discharge pipe 51 and in a direct contact with the bottom 64 is greater than at least one of the curvature R2 and the curvature R2' being the other part of the curvatures excluding the above part, a range in which the upper end 78 can be arranged in the Z axis direction is likely to be wider than that of the example illustrated in Fig. 7.

The curvature R1 and the curvature R1' may either be the same or different from each other. The curvature R2 and the curvature R2' may either be the same or different from each other.

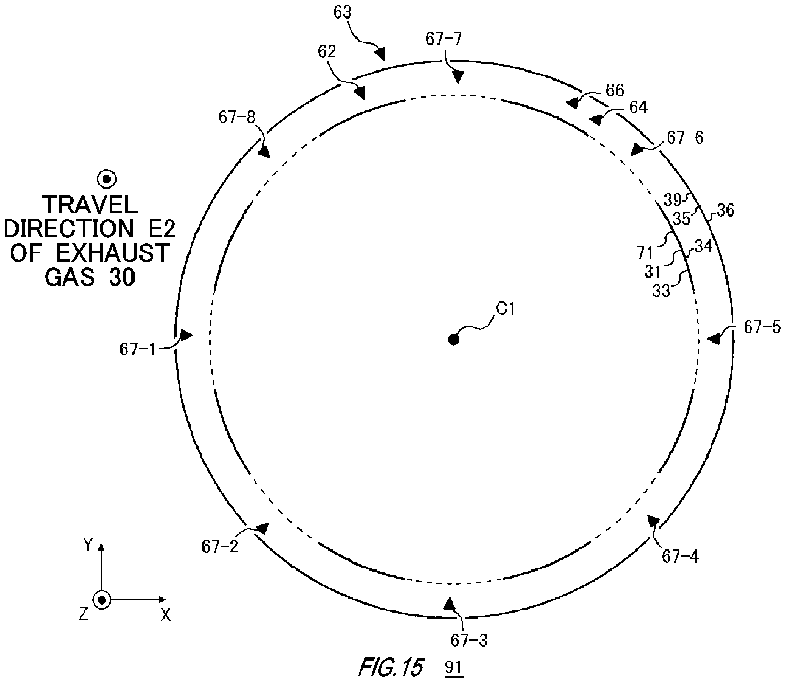

Fig. 15 illustrates one example of the exhaust gas discharging portion 91 illustrated in Fig. 3, as seen from the travel direction E2 of the exhaust gas 30. Note that, the ceiling 65, the spinning portion 80, and the discharge pipe 51 of Fig. 3 are omitted.

In the present example, the internal tube portion 62 is provided with the window portion 67. A position C1 is a central position of the cylindrical exhaust gas discharging portion 91. The plurality of window portions 67 may be disposed in a surrounding manner having the position C1 as its centre around the exhaust gas passage portion 77, as seen from the travel direction E2 of the exhaust gas 30. The plurality of window portions 67 may be disposed at equal intervals around the exhaust gas passage portion 77, as seen from the travel direction E2 of the exhaust gas 30. In the present example, the window portions 67-1 to 67-8 are disposed at every 45 degrees around the exhaust gas passage portion 77, as seen from the travel direction E2 of the exhaust gas 30. In Fig. 15, dashed lines illustrate positions of the window portions 67-1 to 67-8.

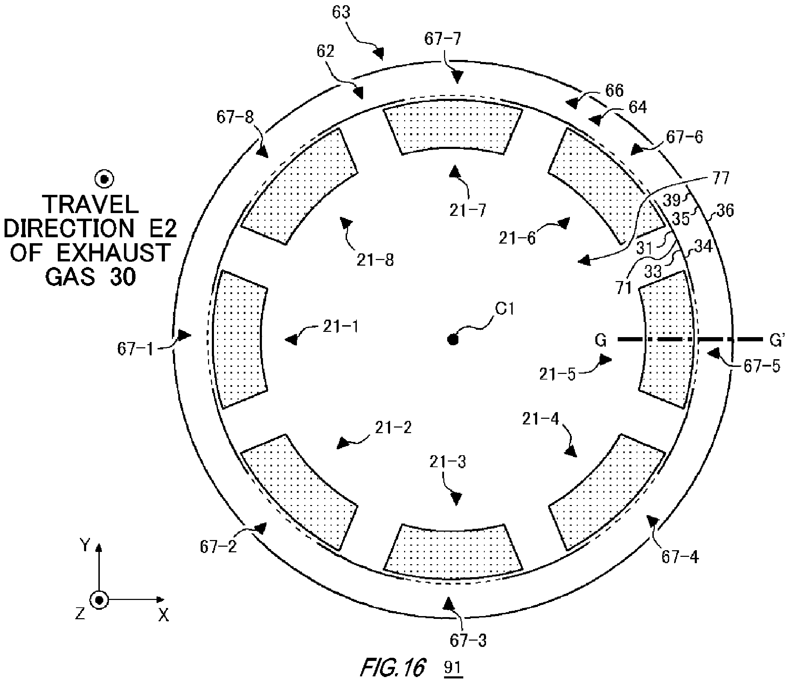

Fig. 16 is another example illustrating the exhaust gas discharging portion 91, as seen from the travel direction E2 of the exhaust gas 30. In the present example, the internal tube portion 62 further includes an eave 21. The exhaust gas discharging portion 91 of the present example is different from the exhaust gas discharging portion 91 illustrated in Fig. 15 in this way. In Fig. 16, the eave 21 is illustrated by hatching.

The eave 21 of the present example extends from the side wall 31 of the internal tube portion into the internal tube portion 62 (exhaust gas passage portion 77). In Fig. 16, for clear visibility of the drawing, the eave 21 is illustrated away from the side wall 31, whereas the eave 21 is actually in a direct contact with the side wall 31. The eave 21 extends from the side wall 31 upward from the window portion 67 (the another end 75 side (refer to Fig. 3) in the travel direction E2 of the exhaust gas 30) into the internal tube portion 62.

The internal tube portion 62 may include a plurality of eaves 21. In the present example, the internal tube portion 62 includes eight eaves 21 (eaves 21-1 to 21-8). In the present example, the eaves 21-1 to 21-8 are respectively arranged above the window portions 67-1 to 67-1. The internal tube portion 62 may include one eave 21 that is continuously disposed in a surrounding manner above the plurality of window portions 67 along the internal surface 33.

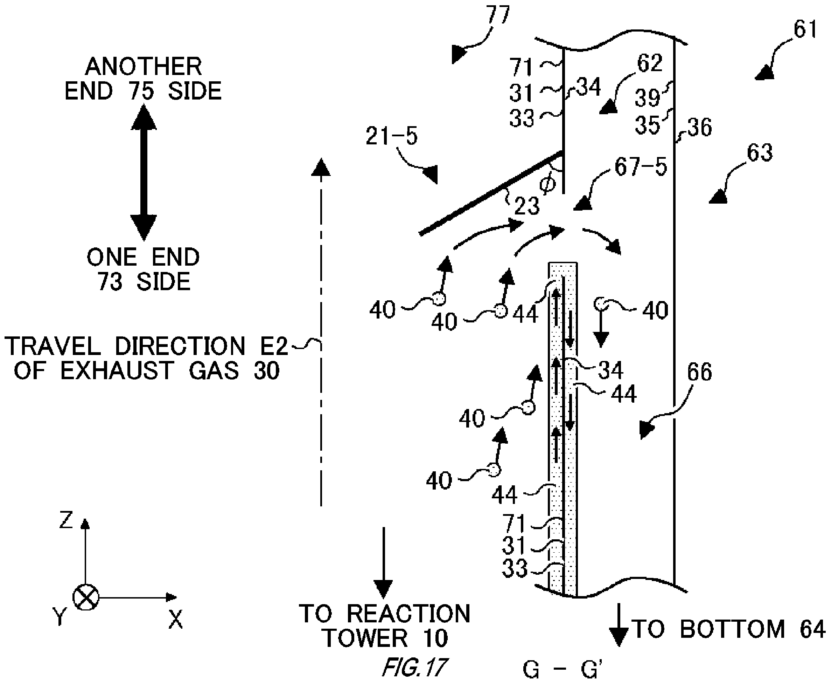

Fig. 17 illustrates one example of a cross-section along a line G-G' of Fig. 16. The line G-G' forms a cross-section XZ that passes through the exhaust gas passage portion 77, the eave 21-5, the side wall 31 of the internal tube portion 62, the discharging space 66, and the side wall 39 of the external tube portion 63.

The eave 21 of the present example extends from the side wall 31 of the internal tube portion into the internal tube portion 62 (exhaust gas passage portion 77). An end on a side wall 31 side of the eave 21-5 in the X axis direction is connected to the side wall 31. This end of the eave 21-5 is connected to the side wall 31 upward from the window portion 67 (on the another end 75 side).

The exhaust gas 30, which spins in the exhaust gas passage portion 77 and travels in the travel direction E2 may contain the liquid 40 in a misty form. This liquid 40 easily forms the liquid film by accumulating on the side wall 71. A liquid 44 is this liquid 40 that has formed the liquid film. In Fig. 17, the liquid 40 in the misty form and the liquid 44 are illustrated by hatching.

In the present example, since the internal tube portion 62 includes the eave 21 above the window portion 67, the liquid 40 in the misty form easily travels by means of a lower surface 23 of the eave 21 in a direction towards the window portion 67. Therefore, as compared to the case in which the internal tube portion 62 includes no eave 21, more liquid 40 and liquid 44 are easily discharged to the discharging space 66.

The eave 21 may guide the liquid 40 in the misty form to the window portion 67. An angle ϕ is an angle formed by the lower surface 23 of the eave 21 and the internal surface 33. The angle ϕ may be an acute angle. Since the angle ϕ is an acute angle, as compared to a case in which the angle ϕ is 90 degrees or more, the liquid 40 in the misty form is easier to be guided to the window portion 67.

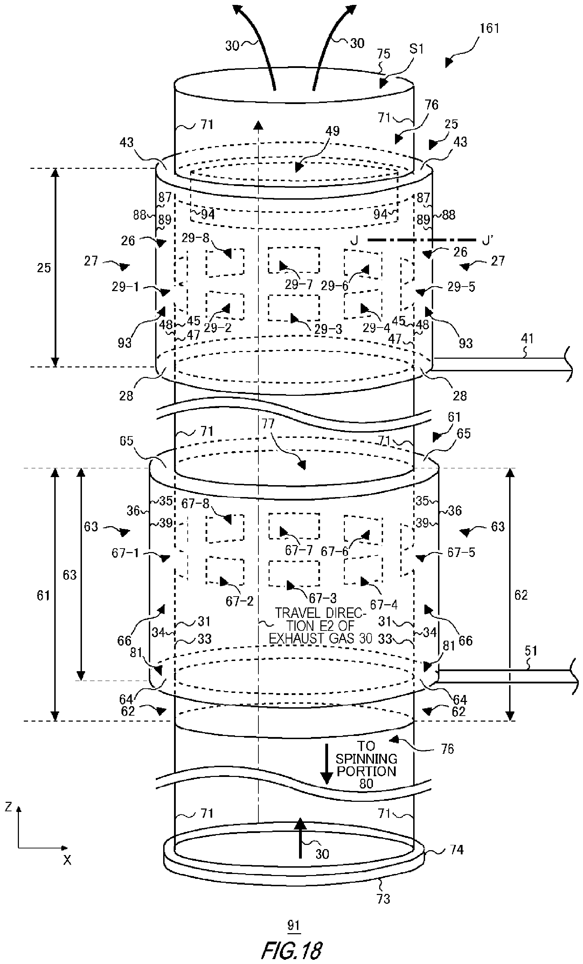

Fig. 18 is another perspective view illustrating one example of the exhaust gas discharging portion 91 of Fig. 1. The exhaust gas discharging portion 91 of the present example is further provided with a collecting portion 25. The exhaust gas discharging portion 91 of the present example is different from the exhaust gas discharging portion 91 illustrated in Fig. 3 in this way.

The exhaust gas discharging portion 91 may include, in the travel direction E2 of the exhaust gas 30, the collecting portion 25 at least one of between the discharging portion 61 and the another end 75, and between the discharging portion 61 and the one end 73. The exhaust gas discharging portion 91 of the present example includes, in the travel direction E2 of the exhaust gas 30, the collecting portion 25 between the discharging portion 61 and the another end 75.

The collecting portion 25 includes an internal tube portion 26, an external tube portion 27, and a bottom 28. The exhaust gas 30 passes through the internal tube portion 26. The external tube portion 27 is disposed so as to surround the internal tube portion 26 as seen from the travel direction E2 of the exhaust gas 30. The internal tube portion 26 is disposed inside the external tube portion 27 as seen from the travel direction E2 of the exhaust gas 30. The bottom 28 connects the internal tube portion 26 and external tube portion 27. The bottom 28 is a part of the collecting portion 25 to which the liquid 40 falls in the collecting portion 25. The collecting portion 25 may include a ceiling 43. The ceiling 43 connects the internal tube portion 26 and the external tube portion 27 upward from the bottom 28. The bottom 28 may include a main portion, similar to the main portion 81 of the discharging portion 61.

The collecting portion 25 is formed of material having durability against the exhaust gas 30, and liquid 40 and exhausted liquid 46. The collecting portion 25 may be formed of the same material as the referred side wall 15 (refer to Fig. 1 and Fig. 2).

The internal tube portion 26, the external tube portion 27, and bottom 28 may be disposed in a surrounding manner around at least a part of the exhaust gas passage portion 76, as seen from the travel direction E2 of the exhaust gas 30. In the present example, the internal tube portion 26, the external tube portion 27, and bottom 28 are disposed in a surrounding manner around the entire exhaust gas passage portion 76, as seen from the travel direction E2 of the exhaust gas 30.

The internal tube portion 26 includes a side wall 45, an internal surface 47 and an external surface 48. The internal surface 47 and external surface 48 are one and the other surfaces of the side wall 45. The internal tube portion 26 includes an exhaust gas passage portion 49. The exhaust gas passage portion 49 is a space surrounded by the side wall 45 (internal surface 47). The side wall 45 may be, in the exhaust gas discharging portion 91, a part of the side wall 71 that extends from the one end 73 to the another end 75 in the travel direction E2 of the exhaust gas 30. The side wall 45 may be integrated with the side wall 71. The exhaust gas passage portion 49 may be, in the exhaust gas discharging portion 91, a part of the exhaust gas passage portion 76 that extends from the one end 73 to the another end 75 in the travel direction E2 of the exhaust gas 30.

The external tube portion 27 includes a side wall 89, and an internal surface 87 and an external surface 88. The internal surface 87 and the external surface 88 are one and the other surfaces of the side wall 89. In the collecting portion 25, a collecting space 93 is provided between the internal tube portion 26 and the external tube portion 27, and upward from the bottom 28. The collecting space 93 may be provided downward from the ceiling 43. The collecting space 93 is a space being in a direct contact with the external surface 48 of internal tube portion 26, the internal surface 87 of external tube portion 27, and an upper surface of the bottom 28. The collecting space 93 may be a space being in a direct contact with a lower surface of the ceiling 43. That is, the collecting space 93 may be a space surrounded by the external surface 48, the internal surface 87, the upper surface of the bottom 28, and the lower surface of ceiling 43.

The internal tube portion 26 may include a window portion 29. In the present example, the window portion 29 penetrates the side wall 45 of the internal tube portion 26. In the present example, the window portion 29 connects the inside of the internal tube portion 26 (i.e. the exhaust gas passage portion 49) and the collecting space 93. The window portion 29 may be disposed upward from the bottom 28, and downward from the ceiling 43.

The internal tube portion 26 may include a plurality of window portions 29. In the present example, the internal tube portion 26 includes eight window portions 29 (window portions 29-1 to 29-8). The plurality of window portions 29 may be disposed in a surrounding manner around the exhaust gas passage portion 49, as seen from the travel direction E2 of the exhaust gas 30.

The collecting portion 25 may include an internal wall 94. In the present example, the internal wall 94 is disposed further inside the internal tube portion 26. The internal wall 94 may be disposed in a surrounding manner so as to surround the exhaust gas passage portion 49.

A collection pipe 41 may be disposed downward from the window portion 29. A connecting part between the collection pipe 41 and the collecting portion 25 may be formed in the same manner as the connecting part between the discharge pipe 51 and the discharging portion 61 illustrated in Fig. 4 to Fig. 14.

The collection pipe 41 is formed of material having durability against the liquid 40 and the exhausted liquid 46. The collection pipe 41 may be formed of the same material as that of the side wall 15 (refer to Fig. 1 and Fig. 2).

The collecting portion 25 may also be disposed in the reaction tower 10 (refer to Fig. 1). If the collecting portion 25 is disposed in the reaction tower 10, the collecting portion 25 may be disposed between the liquid spraying portion 90 (refer to Fig. 1) and the exhaust gas discharge port 17 (refer to Fig. 1) in the reaction tower 10.

The exhaust gas discharging portion 91 may also be the independent liquid discharge unit 161. The discharging portion 61 and the collecting portion 25 may be disposed in the liquid discharge unit 161. The liquid discharge unit 161 may be connected to the exhaust gas treatment apparatus 100 by fastening the fastening portion 74 of the liquid discharge unit 161 and the fastening portion 92 of the exhaust gas treatment apparatus 100 (refer to Fig. 1) together.

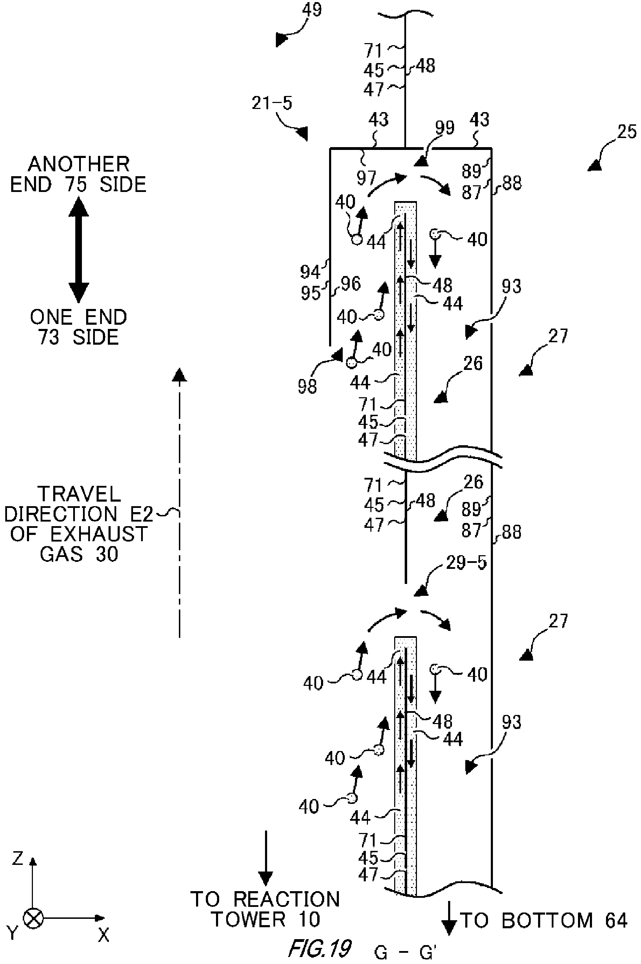

Fig. 19 illustrates one example of a cross-section along a line J-J' of Fig. 18. The line J-J' forms a cross-section XZ that passes through the exhaust gas passage portion 49, the internal wall 94, the side wall 45 of the internal tube portion 26, the collecting space 93, and the side wall 89 of the external tube portion 27.

The internal wall 94 is disposed on a side closer to the exhaust gas passage portion 49 than the side wall 45 of the internal tube portion 26 in the cross-section J-J'. The internal wall 94 includes a first side 95 and a second side 96. The first side 95 is a surface on an exhaust gas passage portion 49 side on the internal wall 94. The second side 96 is a surface on a side wall 45 side on the internal wall 94.

The ceiling 43 may penetrate the side wall 71. In Fig. 19, one and the other end of the ceiling 43 in the X axis direction are respectively connected to the external tube portion 27 and the internal wall 94. The ceiling 43 includes a lower surface 97. The lower surface 97 may be connected to the second side 96 of the internal wall 94 and the internal surface 87 of the side wall 89.

The collecting portion 25 may include a first liquid passage port 98 and a second liquid passage port 99. The first liquid passage port 98 may be disposed at a bottom end of the internal wall 94. The first liquid passage port 98 is a space between the second side 96 of the internal wall 94 and the internal surface 47 of the side wall 45. The first liquid passage port 98 may be disposed in a surrounding manner along the internal surface 47 in the XY plane. The first liquid passage port 98 may be continuously disposed in the surrounding manner along the internal surface 47 in the XY plane.

The second liquid passage port 99 may be disposed at a position of the side wall 71 in the XY plane. The exhaust gas passage portion 49 and the collecting space 93 are communicated by the second liquid passage port 99. The second liquid passage port 99 may be disposed in a surrounding manner at the position of the side wall 71 in the XY plane. The second liquid passage port 99 may be continuously disposed in the surrounding manner at the position of the side wall 71 in the XY plane.

The collecting portion 25 collects the liquid 40 in the collecting space 93. The liquid 40 and the liquid 44 which travel along the side wall 45 in a direction from the one end 73 to the another end 75 easily pass through the window portion 29 in a direction from the internal surface 47 to the external surface 48. The collecting portion 25 of the present example causes the liquid 40 in the misty form that travels in the direction from the one end 73 to the another end 75, and the liquid 44 that travels along the side wall 45 in this direction to pass through the window portion 29, and thereby collect the liquid 40 and the liquid 44 in the collecting space 93.

The collecting portion 25 of the present example includes the internal wall 94 and the ceiling 43 on a side closer to the another end 75 than the window portion 29, in the travel direction E2 of the exhaust gas 30. On the side closer to the another end 75 than the window portion 29, the liquid 40 and the liquid 44, which travel along the side wall 45 in the direction from the one end 73 to the another end 75 easily travel in the first liquid passage port 98 in a direction from the exhaust gas passage portion 49 to the collecting space 93. The collecting portion 25 of the present example causes the liquid 40 in the misty form that travels in the direction from the one end 73 to the another end 75, and the liquid 44 that travels along the side wall 45 in this direction to pass through the first liquid passage port 98 and the second liquid passage port 99, and thereby collect the liquid 40 and the liquid 44 in the collecting space 93. The side wall 45 above the window portion 29 may be provided with an eave, similar to the eave 21 illustrated in Fig. 17.

At least a part of the liquid 40 in the misty form, which has travelled from the inside of the reaction tower 10 to the inside of the exhaust gas discharging portion 91 is discharged to the discharging space 66 in the discharging portion 61. The other part of the liquid 40 in the misty form easily travels in the exhaust gas passage portion 76 in a direction from the discharging portion 61 to the another end 75. At least a part of this other part of the liquid 40 in the misty form is collected by the collecting portion 25.

M1 is an amount of the liquid 40 contained in the exhaust gas 30 to be discharged from the another end 75 of the exhaust gas discharging portion 91 of the present example. M2 is an amount of the liquid 40 contained in the exhaust gas 30 to be discharged from the another end 75 of the exhaust gas discharging portion 91 illustrated in Fig. 3. Since the exhaust gas discharging portion 91 of the present example further includes the collecting portion 25 between the discharging portion 61 and the another end 75 in the travel direction E2 of the exhaust gas 30, the other part of the liquid 40 in the misty form is easily collected by the collecting portion 25. Therefore, the amount M1 of the liquid 40 is likely to be less than the amount M2 of the liquid 40.

The liquid 40 that has been collected in the collecting space 93 then falls to the bottom 28 (refer to Fig. 18). The liquid 40 that has fallen to the bottom 28 (refer to Fig. 18) is then collected by the collection pipe 41. The liquid 40 that has been collected by the collection pipe 41 may be discharged to the discharge pipe 51.

The collecting portion 25 may include at least one of the window portion 29 and the internal wall 94. The collecting portion 25 of the present example includes both of the window portion 29 and the internal wall 94.

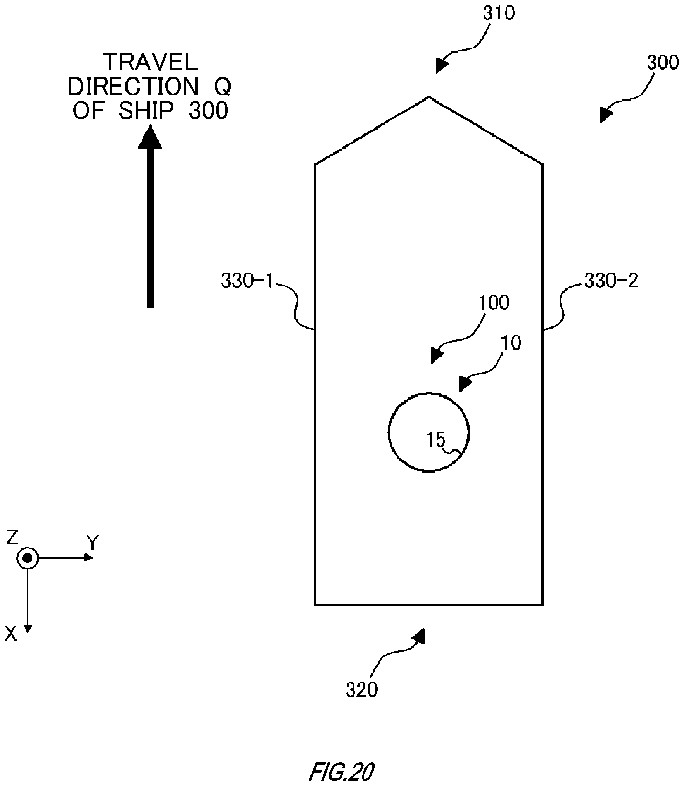

Fig. 20 illustrates one example of placement of the exhaust gas treatment apparatus 100 on a ship 300. Fig. 20 illustrates the one example as seen in a top view of the ship 300 (as seen from top to bottom in the vertical direction). The ship 300 includes a bow 310, a stern 320, and a side 330. In Fig. 20, the ship 300 is surrounded by the ocean.

In Fig. 20, a travel direction Q is a travel direction of the ship 300 (a direction from the stern 320 towards the bow 310). An X axis direction is a direction opposite to the travel direction Q. The ship 300 includes two sides 330 (a side 330-1 and a side 330-2). The side 330-1 and the side 330-2 of the present example extend in a direction parallel to the X axis, and face each other in the Y axis direction.

In Fig. 20, the exhaust gas treatment apparatus 100 placed on the ship 300 is also illustrated. In Fig. 20, components in the exhaust gas treatment apparatus 100 apart from the reaction tower 10 are omitted from illustration. The exhaust gas treatment apparatus 100 is arranged so as to be sandwiched by the side 330-1 and the side 330-2 in the Y axis direction.

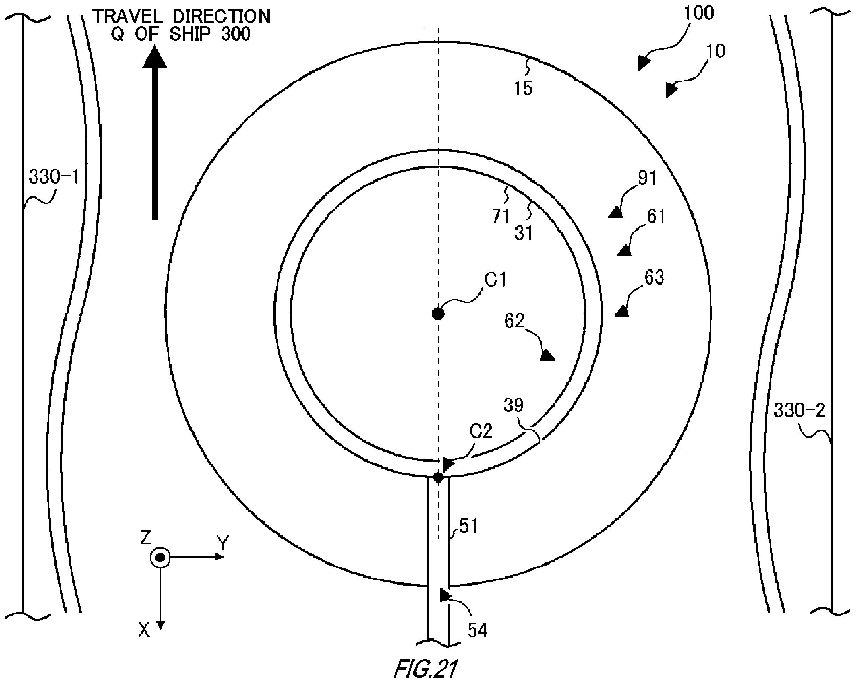

Fig. 21 is an enlarged view of a region including the exhaust gas treatment apparatus 100 and the side 330 of the ship of Fig. 20. In the present example, the reaction tower 10, the discharging portion 61, and the discharge pipe 51 are provided to the ship 300. In Fig. 21, the exhaust gas treatment apparatus 100 illustrated in Fig. 1 is illustrated together with the side 330-1 and the side 330-2.

In the present example, the discharge pipe 51 is disposed in the travel direction Q of the ship 300. The discharge pipe 51 being disposed in the travel direction Q may refer to that the central axis of the discharge pipe 51 (central axis of the liquid passage portion 54 of the discharge pipe 51) being extending in a direction non-orthogonal to the travel direction Q, or this central axis is extending in a direction parallel to the travel direction Q.

In Fig. 21, a dashed line illustrates a straight line that passes through a central position C1 of the reaction tower 10 and extends parallel to the travel direction Q of the ship 300. A position C2 is a position at which this dashed line intersects the side wall 39 of the external tube portion 63. The discharge pipe 51 may extend, in the top view of the ship 300 (as seen from top to bottom in the vertical direction), in a direction passing through the position C1 and the position C2 (a direction of the dashed line), and a direction opposite to the travel direction Q from the side wall 39. In the top view of the ship 300, a position of the central axis of the discharge pipe 51 may be the position of the dashed line illustrated in Fig. 21.

The ship 300 may be heeled over from a horizontal direction depending on a condition of the ocean or the like on a voyage. If the ship 300 is heeled over from the horizontal direction, an angle of heel in the Y axis direction is likely to be greater than an angle of heel in the X axis direction. Therefore, since the discharge pipe 51 is disposed in the travel direction Q of the ship 300, the liquid 40 discharged to the discharge pipe 51 is less likely to flow backward in the liquid passage portion 54 of the discharge pipe 51.

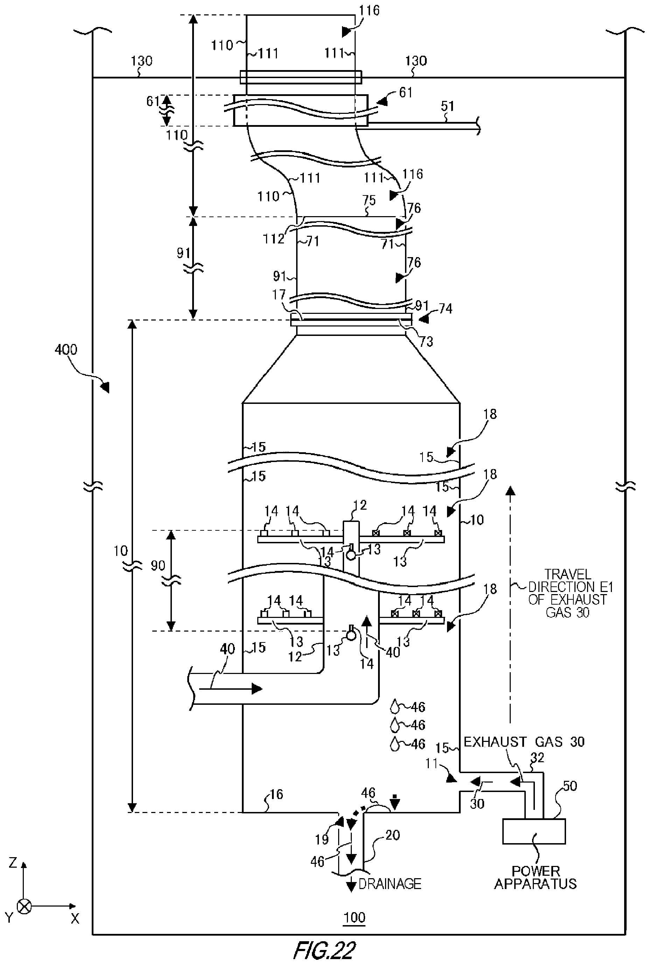

Fig. 22 illustrates another example of the exhaust gas treatment apparatus 100 according to one embodiment of the present invention. The exhaust gas treatment apparatus 100 of the present example includes the reaction tower 10, the discharging portion 61, the discharge pipe 51, the exhaust gas discharging portion 91, and a flue 110. In Fig. 22, double-headed arrows illustrate ranges of the reaction tower 10, the exhaust gas discharging portion 91, and the flue 110 in the Z axis direction.

A storage chamber 400 is a chamber in which the exhaust gas treatment apparatus 100 is placed. The storage chamber 400 may be equipped in the ship 300 (refer to Fig. 21). The storage chamber 400 may be arranged below a funnel top 130. The reaction tower 10, the exhaust gas discharging portion 91, and the flue 110 may be equipped in the storage chamber 400. The flue 110 may penetrate the funnel top 130.

In the present example, the flue 110 is connected to the exhaust gas discharging portion 91. The flue 110 includes a side wall 111 and an exhaust gas passage portion 116. The exhaust gas passage portion 116 is a space surrounded by the flue 110.

In the present example, the discharging portion 61 is disposed in the flue 110. The flue 110 may be provided with the discharging portion 61 formed in the manner illustrated in Fig. 4 to Fig. 11, and Fig. 14 to Fig. 17. The flue 110 may be provided with the discharging portion 61 and the collecting portion 25 which are formed in the manner illustrated in Fig. 18 and Fig. 19.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: reaction tower; 11: exhaust gas introduction port; 12: trunk tube; 13: branch tube; 14: spraying portion; 15: side wall; 16: bottom surface; 17: exhaust gas discharge port; 18: gas treating portion; 19: liquid discharge port; 20: drainage pipe; 21: eave; 23: lower surface; 25: collecting portion; 26: internal tube portion; 27: external tube portion; 28: bottom; 29: window; 30: exhaust gas; 31: side wall; 32: exhaust gas introducing pipe; 33: internal surface; 34: external surface; 35: internal surface; 36: external surface; 37: opening; 38: bottom end; 39: side wall; 40: liquid; 41: collection pipe; 43: ceiling; 44: liquid; 45: side wall; 46: exhausted liquid; 47: internal surface; 48: external surface; 49: exhaust gas passage portion; 50: power apparatus; 51: discharge pipe; 53: pipe wall; 54: liquid passage portion; 55: inserting part; 57: internal surface; 58: external surface; 59: edge; 60: pump; 61: discharging portion; 62: internal tube portion; 63: external tube portion; 64: bottom; 65: ceiling; 66: discharging space; 67: window; 69: opening; 70: volumetric flow rate controller; 71: side wall; 72: valve; 73: one end; 74: fastening portion; 75: another end; 76: exhaust gas passage portion; 77: exhaust gas passage portion; 78: upper end; 79: end; 80: spinning portion; 81: main portion; 82: wing; 83: upper surface; 84: lower surface; 86: end; 87: internal surface; 88: external surface; 89: side wall; 90: liquid spraying portion; 91: exhaust gas discharging portion; 92: fastening portion; 93: collecting space; 94: internal wall; 95: first side; 96: second side; 97: lower surface; 98: first liquid passage port; 99: second liquid passage port; 100: exhaust gas treatment apparatus; 110: flue; 111: side wall; 116: exhaust gas passage portion; 130: funnel top; 161: liquid discharge unit; 300: ship; 310: bow; 320: stern; 330: side; 400: storage chamber

## Claims

1. An exhaust gas treatment apparatus, comprising:
a reaction tower having an exhaust gas introduction port to which an exhaust gas is introduced, an exhaust gas discharge port from which the exhaust gas is discharged, and a liquid spraying portion provided between the exhaust gas introduction port and the exhaust gas discharge port, the reaction tower being supplied with a liquid for treating the exhaust gas;
a discharging portion arranged upward from the liquid spraying portion, and from which the liquid is discharged; and
a discharge pipe connected to the discharging portion and from which the liquid discharged by the discharging portion is discharged, wherein
the liquid is configured to be sprayed into the reaction tower in the liquid spraying portion,
the discharging portion has an internal tube portion through which the exhaust gas passes, an external tube portion provided so as to surround the internal tube portion, and a bottom for connecting the internal tube portion and the external tube portion, the discharging portion being configured to discharge the liquid in a discharging space between the internal tube portion and the external tube portion, and upward from the bottom,
the discharge pipe has a liquid passage portion configured to penetrate the external tube portion and thereby is connected to the discharging space, the liquid passage portion being passed through by the liquid, and
at least a part of the liquid passage portion configured to penetrate the external tube portion is arranged downward from an upper surface of a main portion of the bottom.

2. The exhaust gas treatment apparatus according to claim 1, wherein the discharge pipe is configured to penetrate the external tube portion and being in a direct contact with the internal tube portion.

3. The exhaust gas treatment apparatus according to claim 1 or 2, wherein
the external tube portion has an opening to which the discharge pipe is inserted,
the bottom is provided with a first notch corresponding to the opening, and
the discharge pipe is connected to the first notch.

4. The exhaust gas treatment apparatus according to claim 3, wherein
the discharge pipe has an inserting part to be inserted to the discharging space, and
the discharge pipe is provided with a second notch on a pipe wall above the inserting part.

5. The exhaust gas treatment apparatus according to claim 4, wherein the second notch of the discharge pipe is connected to the first notch of the bottom.

6. The exhaust gas treatment apparatus according to claim 4 or 5, wherein an area of the second notch is equal to or greater than a cross-sectional area of the liquid passage portion of the discharge pipe.

7. The exhaust gas treatment apparatus according to any one of claims 4 to 6, wherein a curvature of an edge of the inserting part is equal to a curvature of the internal tube portion, as seen in a direction from the exhaust gas discharge port to the exhaust gas introduction port.

8. The exhaust gas treatment apparatus according to any one of claims 4 to 7, wherein an upper end of a pipe wall below the second notch of the discharge pipe is arranged either at a same height as an upper surface of the bottom, or downward from the upper surface of the bottom, as seen in a direction intersecting a cross-section of the discharge pipe.

9. The exhaust gas treatment apparatus according to any one of claims 3 to 8, wherein
the bottom has an end being in a direct contact with the first notch, and
a thickness of the end in a direction from an upper surface to a lower surface of the bottom may be greater than a thickness between an upper surface and a lower surface of the bottom excluding the end.

10. The exhaust gas treatment apparatus according to any one of claims 1 to 9, wherein in a cross-section of the discharge pipe, a curvature of a part of the pipe wall of the discharge pipe, which is in a direct contact with the bottom is greater than a curvature of another part of the pipe wall excluding the part of the pipe wall.

11. The exhaust gas treatment apparatus according to any one of claims 1 to 10, wherein
the reaction tower, the discharging portion, and the discharge pipe are disposed on a ship, and
the discharge pipe is disposed in a travel direction of the ship.

12. The exhaust gas treatment apparatus according to any one of claims 1 to 11, wherein
the internal tube portion has a window portion configured to penetrate a side wall of the internal tube portion, and connect an inside of the internal tube portion and the discharging space, and
the discharge pipe is disposed downward from the window.

13. The exhaust gas treatment apparatus according to claim 12, wherein the internal tube portion further has an eave extending from a side wall of the internal tube portion upward from the window portion to an inside of the internal tube portion.

14. The exhaust gas treatment apparatus according to any one of claims 1 to 13, wherein
the discharging portion is provided in the reaction tower, and
the discharging portion is provided between the liquid spraying portion and the exhaust gas discharge port.

15. The exhaust gas treatment apparatus according to any one of claims 1 to 13, further comprising:
an exhaust gas discharging portion connected to the exhaust gas discharge port, wherein
the exhaust gas discharging portion has an exhaust gas passage portion through which the exhaust gas passes,
the exhaust gas discharging portion has one end connected to the exhaust gas discharge port, and another end on an opposite side of the one end,
an area of the exhaust gas passage portion in a cross-section orthogonal to a direction from the one end to the another end is smaller than an area inside the reaction tower in a cross-section orthogonal to a direction from the exhaust gas introduction port to the exhaust gas discharge port, and
the discharging portion is provided in the exhaust gas discharging portion.

16. A liquid discharge unit connected to an exhaust gas treatment apparatus for treating an exhaust gas, comprising:
a discharging portion having an internal tube portion connected to the exhaust gas treatment apparatus, an external tube portion provided so as to surround the internal tube portion, and a bottom for connecting the internal tube portion and the external tube portion, the discharging portion being configured to discharge a liquid contained inside the internal tube portion to a discharging space between the internal tube portion and the external tube portion and upward from the bottom; and
a discharge pipe configured to penetrate the external tube portion, and has a liquid passage portion through which the liquid passes, wherein
at least a part of the liquid passage portion configured to penetrate the external tube portion is arranged downward from an upper surface of a main portion of the bottom.
